(19) Europäisches Patentamt
European Patent Office
Office européen des brevets

(11) Veröffentlichungsnummer: **0 310 080 A2**

# (12) EUROPÄISCHE PATENTANMELDUNG

(21) Anmeldenummer: **88116096.4**

(51) Int. Cl.4: **C09B 57/00 , G11B 7/24**

(22) Anmeldetag: **29.09.88**

(30) Priorität: **01.10.87 DE 3733173**
**11.05.88 DE 3816187**

(43) Veröffentlichungstag der Anmeldung:
**05.04.89 Patentblatt 89/14**

(84) Benannte Vertragsstaaten:
**BE CH DE FR GB IT LI NL**

(71) Anmelder: **BASF Aktiengesellschaft**
**Carl-Bosch-Strasse 38**
**D-6700 Ludwigshafen(DE)**

(72) Erfinder: **Schrott, Wolfgang, Dr.**
**Bruesseler Ring 45**
**D-6700 Ludwigshafen(DE)**
Erfinder: **Neumann, Peter, Dr.**
**Poststrasse 28**
**D-6800 Mannheim 31(DE)**
Erfinder: **Brosius, Sibylle, Dr.**
**L 9,3**
**D-6800 Mannheim 1(DE)**
Erfinder: **Barzynski, Helmut, Dr.**
**An der Ameisenhalde 49**
**D-6702 Bad Duerkheim(DE)**
Erfinder: **Schomann, Klaus Dieter, Dr.**
**Kopernikusstrasse 47**
**D-6700 Ludwigshafen(DE)**
Erfinder: **Kuppelmaier, Harald, Dr.**
**Kuehler Grund 30 a**
**D-6900 Heidelberg(DE)**

## (54) Azulenquadratsäurefarbstoffe, Azulene als deren Zwischenprodukte sowie optisches Aufzeichnungsmedium.

(57) Azulenquadratsäurefarbstoffe der Formel

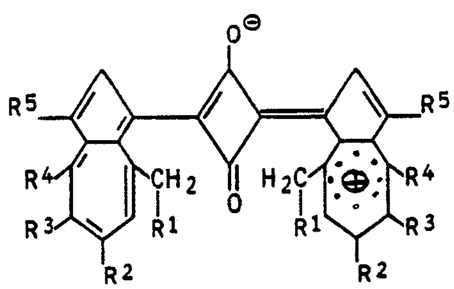

in der $R^1$, $R^2$, $R^3$, $R^4$ und $R^5$ jeweils die in der Beschreibung genannte Bedeutung besitzten, Azulenderivate der Formel

EP 0 310 080 A2

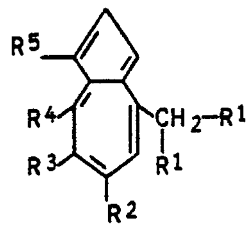

in der $R^1$, $R^2$, $R^3$, $R^4$ und $R^5$ jeweils die in der Beschreibung genannte Bedeutung besitzten, als deren Zwischenprodukte sowie ein optisches Aufzeichnungsmedium, enthaltend die neuen Farbstoffe.

## Azulenquadratsäurefarbstoffe, Azulene als deren Zwischenprodukte sowie optisches Aufzeichnungsmedium

Die vorliegende Erfindung betrifft neue Azulenquadratsäurefarbstoffe mit besonderem Substitutionsmuster, neue Azulene als deren Zwischenprodukte sowie ein neues optisches Aufzeichnungsmedium, das die neuen Azulenquadratsäurefarbstoffe enthält.

Zur kostengünstigen Herstellung optischer Datenaufzeichnungsträger werden Farbstoffe mit besonderen Eigenschaften benötigt. Diese Farbstoffe sollten

- eine starke Absorption zwischen 700 und 900 nm aufweisen, um mit Halbleiterlasern beschreibbare Schichten zu liefern,
- in Schicht eine hohe Reflektivität im nahen Infrarot (700 bis 900 nm) aufweisen, um mit einem einfachen Schichtaufbau (ohne Reflektorschicht) auszukommen,
- eine hohe Löslichkeit aufweisen, um beispielsweise die dünne Speicherschicht durch Spincoating auf einen Träger aufbringen zu können, und
- in dünnen Schichten eine hohe Stabilität aufweisen.

Alle bisher bekannten Speichermaterialien weisen zumindest in einem der genannten Anforderungspunkte erhebliche Mängel auf.

Aufgabe der vorliegenden Erfindung war es, neue Farbstoffe bereitzustellen, bei denen die obengenannten Mängel nicht mehr oder höchstens nur in äußerst geringem Maße auftreten.

Es wurden nun neue Azulenquadratsäurefarbstoffe der Formel I

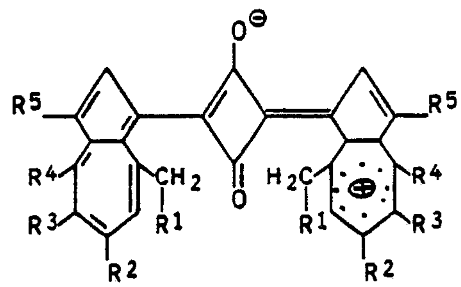

(I)

gefunden, in der

$R^1$ $C_1$-$C_{12}$-Alkyl, das gegebenenfalls durch Halogen, Amino, $C_1$-$C_{12}$-Alkoxy, Phenyl, substituiertes Phenyl, Carboxyl, $C_1$-$C_{12}$-Alkoxycarbonyl, $C_1$-$C_{12}$-Halogenalkoxycarbonyl, $C_1$-$C_{12}$-Phenylalkoxycarbonyl, Cyano, $C_1$-$C_{12}$-Alkanoyloxy, Benzoyloxy, substituiertes Benzoyloxy und/oder den Rest

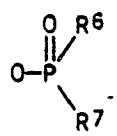 ,

wobei $R^6$ und $R^7$ gleich oder verschieden sind und unabhängig voneinander jeweils für $C_1$-$C_4$-Alkyl oder Phenyl stehen, substituiert ist, Carboxyl, $C_1$-$C_{12}$-Alkoxycarbonyl, wobei die Alkylkette gegebenenfalls durch ein oder mehrere Sauerstoffatome unterbrochen ist, Carbamoyl oder $C_1$-$C_4$-Mono- oder Dialkylcarbamoyl und

$R^2$, $R^3$, $R^4$ und $R^5$ gleich oder verschieden sind und unabhängig voneinander jeweils Wasserstoff oder $C_1$-$C_{12}$-Alkyl, das gegebenenfalls durch Halogen, Amino, $C_1$-$C_{12}$-Alkoxy, Phenyl, substituiertes Phenyl, Carboxyl, $C_1$-$C_{12}$-Alkoxycarbonyl oder Cyano substituiert ist, bedeuten,

mit der Maßgabe, daß wenn $R^5$ Wasserstoff bedeutet, an einem oder beiden Azulenringen die Ringpositionen der Substituenten $CH_2$-$R^1$ und $R^4$ innerhalb eines Azulenrings auch gegeneinander vertauscht sein können und daß $R^1$ auch Wasserstoff bedeutet, wenn $R^5$ für Methyl oder Ethyl, das jeweils durch Phenyl oder substituiertes Phenyl substituiert ist, oder für $C_3$-$C_{12}$-Alkyl steht oder wenn mindestens einer der beiden Reste $R^2$ und $R^4$ für Phenyl oder substituiertes Phenyl steht.

Alle in den erfindungsgemäßen Verbindungen auftretenden Alkylgruppen können sowohl geradkettig als

auch verzweigt sein.

Für den Fall, daß in den erfindungsgemäßen Verbindungen substituierte Phenylgruppen auftreten, kommen als Substituenten beispielsweise $C_1$-$C_4$-Alkyl, $C_1$-$C_4$-Alkoxy, $C_1$-$C_4$-Dialkylamino, N-Phenyl-N-($C_1$-$C_4$-alkyl)amino oder Halogen in Betracht.

Für den Fall, daß in den erfindungsgemäßen Verbindungen durch Sauerstoffatome unterbrochene Alkylgruppen auftreten, sind solche bevorzugt, die durch 1 bis 3 Sauerstoffatome unterbrochen sind.

Unter Halogen ist jeweils vorzugsweise Fluor, Chlor oder Brom zu verstehen.

Die Reste $R^1$, $R^2$, $R^3$, $R^4$ und $R^5$ in Formel I sind beispielsweise Methyl, Ethyl, Propyl, Isopropyl, Butyl, Isobutyl, sec-Butyl, tert-Butyl, Pentyl, Isopentyl, Neopentyl, tert-Pentyl, 2-Methylbutyl, Hexyl, 2-Methylpentyl, Isohexyl, Heptyl, Octyl, 2-Ethylhexyl, Nonyl, Decyl, Undecyl, Dodecyl; Fluormethyl, Chlormethyl, Difluormethyl, Trifluormethyl, Trichlormethyl, 2-Fluorethyl, 2-Chlorethyl, 2-Bromethyl, 1,1,1-Trifluorethyl, Heptafluorpropyl, 4-Chlorbutyl, 5-Fluorpentyl, 6-Chlorhexyl; Cyanomethyl, 2-Cyano ethyl, 3-Cyanopropyl, 2-Cyanobutyl, 4-Cyanobutyl, 5-Cyanopentyl, 6-Cyanohexyl; 2-Aminoethyl, 2-Aminopropyl, 3-Aminopropyl, 2-Aminobutyl, 4-Aminobutyl, 5-Aminopentyl, 6-Aminohexyl; 2-Hydroxyethyl, 2-Hydroxypropyl, 3-Hydroxypropyl, 2-Hydroxybutyl, 4-Hydroxybutyl, 5-Hydroxypentyl, 6-Hydroxyhexyl; 2-Methoxyethyl, 2-Ethoxyethyl, 2-Propoxyethyl, 2-Isopropoxyethyl, 2-Butoxyethyl, 2-Methoxypropyl, 2-Ethoxypropyl, 3-Ethoxypropyl, 4-Ethoxybutyl, 4-Isopropoxybutyl, 5-Ethoxypentyl, 6-Methoxyhexyl; Benzyl, 1-Phenylethyl, 2-Phenylethyl, 4-Chlorbenzyl, 4-Methoxybenzyl, 2-(4-Methylphenyl)ethyl; Carboxymethyl, 2-Carboxyethyl, 3-Carboxypropyl, 4-Carboxybutyl, 5-Carboxypentyl, 6-Carboxyhexyl; Methoxycarbonylmethyl, Ethoxycarbonylmethyl, 2-Methoxycarbonylethyl, 2-Ethoxycarbonylethyl, 3-Methoxycarbonylpropyl, 3-Ethoxycarbonylpropyl, 4-Methoxycarbonylbutyl, 4-Ethoxycarbonylbutyl, 5-Methoxycarbonylpentyl, 5-Ethoxycarbonylpentyl, 6-Methoxycarbonylhexyl oder 6-Ethoxycarbonylhexyl.

$R^2$ und $R^4$ sind weiterhin z.B. 4-Methylphenyl, 4-Methoxyphenyl oder 4-Chlorphenyl.

$R^1$ in Formel I ist weiterhin z. B. Methoxycarbonyl, Ethoxycarbonyl, Propoxycarbonyl, Isopropoxycarbonyl, Butoxycarbonyl, Isobutoxycarbonyl, sec-Butoxycarbonyl, tert-Butoxycarbonyl, Pentyloxycarbonyl, Isopentyloxycarbonyl, Neopentyloxycarbonyl, tert-Pentyloxycarbonyl, Hexyloxycarbonyl, Isohexyloxycarbonyl, Heptyloxycarbonyl, Octyloxycarbonyl, Isooctyloxycarbonyl, Nonyloxycarbonyl, Isononyloxycarbonyl, Decyloxycarbonyl, Isodecyloxycarbonyl, Undecyloxycarbonyl, Dodecyloxycarbonyl (die Bezeichnungen Isooctyl, Isononyl und Isodecyl sind Trivialbezeichnungen und stammen von den nach der Oxosynthese erhaltenen Alkoholen - vgl. dazu Ullmanns Encyklopädie der Technischen Chemie, 4. Auflage, Band 7, Seiten 215 bis 217, sowie Band 11, Seiten 435 und 436), 2-Methoxyethoxycarbonyl, 2-Ethoxyethoxycarbonyl, 3,6-Dioxaheptyloxycarbonyl, 1-Methoxycarbonylethyl, 1-Ethoxycarbonylethyl, 1-Propoxycarbonylethyl, 1-Isopropoxycarbonylethyl, 1-Butoxycarbonylethyl, 1-Isobutoxycarbonylethyl, 1-sec-Butoxycarbonylethyl, 1-Methoxycarbonylpropyl, 1-Ethoxycarbonylpropyl, 1-Propoxycarbonylpropyl, 1-Isopropoxycarbonylpropyl, 1-Butoxycarbonylpropyl, 1-Isobutoxycarbonylpropyl, 1-sec-Butoxycarbonylpropyl, α-(Methoxycarbonyl)benzyl, α-(Ethoxycarbonyl)benzyl, Acetyloxymethyl, 2-Acetyloxyethyl, 2-(2,2-Dimethylpropionyloxy)ethyl, 2-Decanoyloxyethyl, Benzoyloxymethyl, 2-Benzoyloxyethyl, 2-(3,5-Dimethoxy-4-methylbenzoyloxy)ethyl, 2-(Dimethylphosphinato)ethyl, 2-(Diethylphosphinato)ethyl, 2-(Methyl-ethylphosphinato)ethyl, 3-Ethyl-2-(methyl-ethylphosphinato)propyl oder 2-(Diphenylphosphinato)ethyl.

Bevorzugt sind Azulenquadratsäurefarbstoffe der Formel I, in der $R^2$, $R^3$, $R^4$ und $R^5$ jeweils $C_1$-$C_6$-Alkyl bedeuten und $R^1$ die obengenannte Bedeutung besitzt.

Besonders bevorzugt sind Azulenquadratsäurefarbstoffe der Formel I, in der $R^2$ und $R^4$ jeweils Methyl und $R^3$ und $R^5$ jeweils Wasserstoff bedeuten und $R^1$ die obengenannte Bedeutung besitzt. Diese Farbstoffe entsprechen der Formel Ia

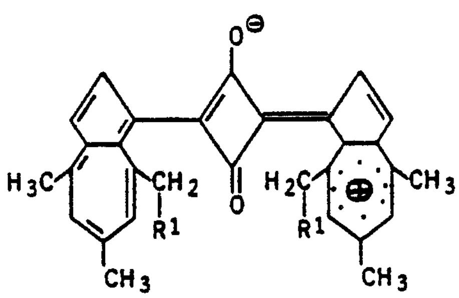

(Ia).

Ganz besonders bevorzugt sind Azulenquadratsäurefarbstoffe der Formel I in der $R^2$ und $R^4$ jeweils Wasserstoff, $R^3$ Isopropyl und $R^5$ Methyl bedeuten und $R^1$ die obengenannte Bedeutung besitzt. Diese Farbstoffe entsprechen der Formel I, b

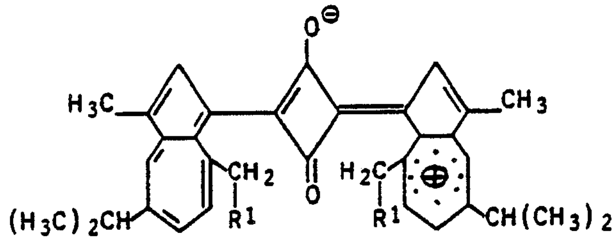

(Ib),

Weiterhin bevorzugt sind Azulenquadratsäurefarbstoffe der Formel I, in der $R^1$ $C_1$-$C_{12}$-Alkyl, das durch $C_1$-$C_{12}$-Alkoxycarbonyl substituiert ist, bedeutet. Insbesondere seien diejenigen Azulenquadratsäurefarbstoffe der Formel I hervorgehoben, in der $R^1$ $C_1$-$C_{12}$-Alkoxycarbonylmethyl bedeutet.

Die Farbstoffe der Formel I werden aus Azulenderivaten der Formel II, in der $R^1$, $R^2$, $R^3$, $R^4$ und $R^5$ jeweils die obengenannte Bedeutung besitzen, durch Umsetzung mit Quadratsäure der Formel III gemäß der folgenden Gleichung erhalten:

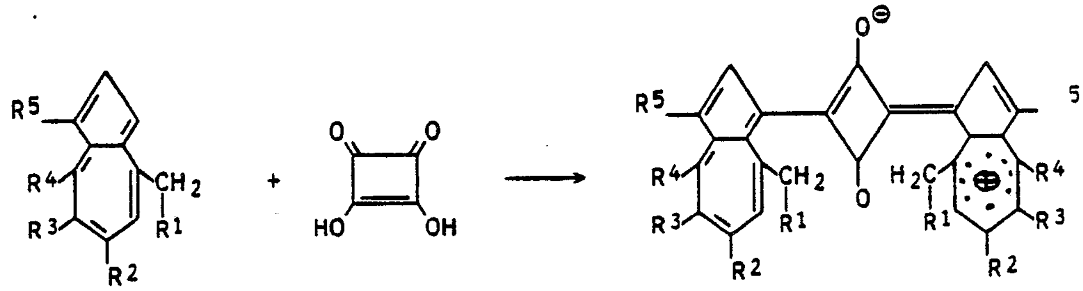

(II) (III) (I)

Bei denjenigen Azulenderivaten der Formel II, in denen $R^5$ Wasserstoff bedeutet, kann die Verknüpfung zur Quadratsäure an unterschiedlichen Ringpositionen des Fünfrings erfolgen, wobei isomere Produkte entstehen können, in denen die Ringpositionen der Substituenten $CH_2$-$R^1$ und $R^4$, wie oben ausgeführt, gegeneinander vertauscht sind. Es sind nämlich dann Verbindungen, bei denen die Bindung zur Quadratsäure an derjenigen Seite erfolgt, an der der Substituent $CH_2$-$R^1$ gebunden ist, von solchen Verbindungen zu unterscheiden, bei denen die Bindung zur Quadratsäure an derjenigen Seite erfolgt, an der der Substituent $R^4$ gebunden ist. Diese isomeren Verbindungen können chromatographisch getrennt werden. Für die Anwendung in Speicherschichten werden jedoch üblicherweise die Isomerengemische eingesetzt.

Das Herstellverfahren ist an sich bekannt und beispielsweise in Angew. Chem. 78, 937 (1966), beschrieben.

Bei der Umsetzung von Quadratsäure mit Azulenderivaten der Formel I, in der $R^1$ für $C_1$-$C_{12}$-Alkyl, das durch Hydroxy substituiert ist, steht, insbesondere bei den entsprechenden $C_2$-$C_3$-Hydroxyalkylderivaten, hat sich gezeigt, daß in verstärktem Maße ein cyclisiertes 1:1-Addukt aus Azulenderivat und Quadratsäure als Nebenprodukt entsteht.

Die vorliegende Erfindung betrifft weiterhin neue Azulenderivate der Formel II

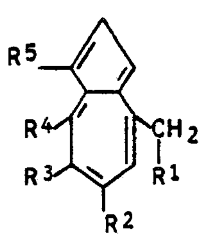

(II),

in der

$R^1$ $C_2$-$C_{12}$-Alkyl, das gegebenenfalls durch Halogen, Amino, $C_1$-$C_{12}$-Alkoxy, Phenyl, substituiertes Phenyl, $C_1$-$C_{12}$-Alkoxycarbonyl, $C_1$-$C_{12}$-Halogenalkoxycarbonyl, $C_1$-$C_{12}$-Phenylalkoxycarbonyl, Cyano, $C_1$-$C_{12}$-Alkanoyloxy, Benzoyloxy, substituiertes Benzoyloxy und/oder den Rest

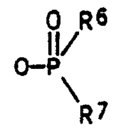 ,

wobei $R^6$ und $R^7$ gleich oder verschieden sind und unabhängig voneinander jeweils für $C_1$-$C_4$-Alkyl oder Phenyl stehen, substituiert ist, Carboxyl, $C_1$-$C_{12}$-Alkoxycarbonyl, wobei die Alkylkette gegebenenfalls durch ein oder mehrere Sauerstoffatome unterbrochen ist, Carbamoyl oder $C_1$-$C_4$-Mono- oder Dialkylcarbamoyl und

$R^2$, $R^3$, $R^4$ und $R^5$ gleich oder verschieden sind und unabhängig voneinander jeweils Wasserstoff oder $C_1$-$C_{12}$-Alkyl, das gegebenenfalls durch Halogen, Amino, $C_1$-$C_{12}$-Alkoxy, Phenyl, substituiertes Phenyl, Carboxyl, $C_1$-$C_{12}$-Alkoxycarbonyl oder Cyano substituiert ist, bedeuten, mit der Maßgabe, daß $R^1$ auch Wasserstoff bedeutet, wenn $R^5$ für Methyl oder Ethyl, das jeweils durch Phenyl oder substituiertes Phenyl substituiert ist, oder für $C_3$-$C_{12}$-Alkyl steht oder wenn mindestens einer der beiden Reste $R^2$ und $R^4$ für Phenyl oder substituiertes Phenyl steht.

Bezüglich der beispielhaften Aufzählung der Substituenten $R^1$, $R^2$, $R^3$, $R^4$ und $R^5$ wird auf die voranstehenden Ausführungen hingewiesen.

Besonders bevorzugt sind Azulenderivate der Formel II, in der $R^2$ und $R^4$ jeweils Methyl und $R^3$ und $R^5$ jeweils Wasserstoff bedeuten und $R^1$ die obengenannte Bedeutung besitzt.

Ganz besonders bevorzugt sind Azulenderivate der Formel II, in der $R^2$ und $R^4$ jeweils Wasserstoff, $R^3$ Isopropyl und $R^5$ Methyl bedeuten und $R^1$ die obengenannte Bedeutung besitzt.

Weiterhin bevorzugt sind Azulenderivate der Formel II, in der $R^1$ $C_2$-$C_{12}$-Alkyl, das durch $C_1$-$C_{12}$-Alkoxycarbonyl substituiert ist, bedeutet.

Die neuen Azulenderivate der Formel II sind wertvolle Zwischenprodukte für die Herstellung der erfindungsgemäßen Azulenquadratsäurefarbstoffe der Formel I.

Man erhält sie beispielsweise aus substituierten Methylazulenen, z.B. 4,6,8-Trimethylazulen oder Guajazulen, durch Anionisierung, z.B. mit Lithiumdiisopropylamid und anschließende Alkylierung mit Halogenverbindungen der Formel IV

$R^1$-Hal (IV),

in der $R^1$ die obengenannte Bedeutung besitzt und Hal für Halogen, insbesondere für Chlor, Brom oder Iod steht.

Es besteht auch die Möglichkeit, ausgehend von den entsprechenden Azulencarbonsäuren zu weiteren erfindungsgemäßen Produkten zu gelangen. So eignen sich z.B. diejenigen Azulenderivate der Formel IIa und IIb

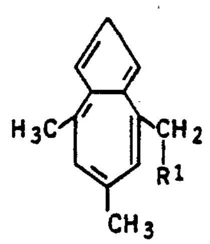

(IIa)

,

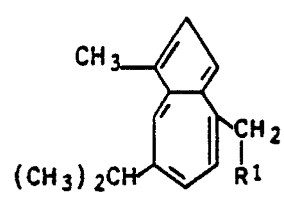

(IIb)

in der $R^1$ jeweils für $C_2$-$C_{12}$-Alkyl steht, das durch Carboxyl substituiert ist, besonders zur weiteren Derivatisierung. Aus ihnen können nach an sich bekannten Methoden beispielsweise die jeweiligen Ester, Nitrile oder Hydroxyverbindungen gewonnen werden. Eine Herstellmethode für Azulencarbonsäuren ist z.B. in Helv. Chim. Acta, Vol. 65, S. 280 bis 285, 1982, beschrieben.

Ausgehend von den Hydroxyverbindungen können nun, wiederum nach bekannten Methoden, diejenigen Verbindungen der Formel II erhalten werden, in der $R^1$ für $C_1$-$C_{12}$-Alkyl steht, das durch einen Alkoxy-, Alkanoyloxy- oder Benzoyloxyrest oder den Rest

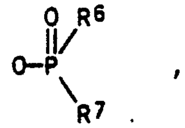

wobei $R^6$ und $R^7$ jeweils die obengenannte Bedeutung besitzt, substituiert ist.

Dies geschieht beispielsweise durch Umsetzung einer Hydroxyverbindung der Formel VI

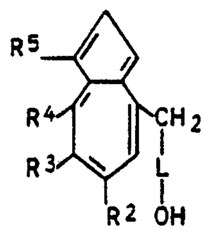

(VI),

in der $R^2$, $R^3$, $R^4$ und $R^5$ jeweils die obengenannte Bedeutung besitzen und L für $C_1$-$C_{12}$-Alkylen steht, mit Alkylierungsmitteln (z.B. Dimethylsulfat), Carbonsäurechloriden oder Phosphinsäurechloriden in Gegenwart einer Base (z.B. Triethylamin).

Die Verbindung der Formel V

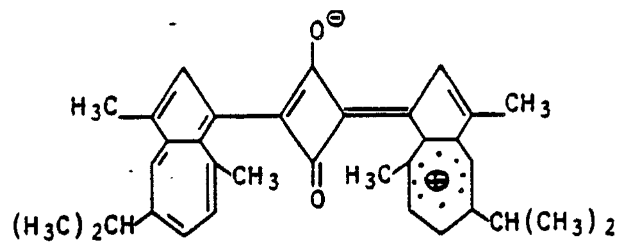

(V),

die aus Guajazulen und Quadratsäure hergestellt wird, ist bekannt und z.B. in Angew. Chem. 78, 937 (1966), beschrieben. Ihre Verwendung in optischen Speichermedien ist beispielsweise aus der DE-A-3 320 674 sowie der älteren Anmeldung DE-A-3 703 985 ebenfalls bekannt.

Verbindung V zeigt zwar gute optische Daten, so daß daraus hergestellte dünne Farbstoffschichten ohne Reflektorschicht zur optischen Informationsaufzeichnung geeignet sind, jedoch ist sie zur Herstellung von Spincoating-Rezepturen nur in halogenierten Kohlenwasserstoffen ausreichend löslich. Um Speicherschichten auf gerillte Polycarbonat-Substrate aufschleudern zu können, ist daher eine Schutzschicht gegenüber diesen aggressiven Lösungsmitteln erforderlich. Außerdem neigt Verbindung V in dünnen Schichten zur Rekristallisation, so daß der Rezeptur häufig bis zu 30 Prozent Bindemittel zugesetzt werden müssen, um die Rekristallisation zu unterdrücken.

Eine weitere Aufgabe der vorliegenden Erfindung war es, ein neues optisches Aufzeichnungsmedium mit Azulenquadratsäurederivaten als Speichermaterialien bereitzustellen, das in einfacher Weise hergestellt werden kann, das gut beschreibbar und anschließend auch gut lesbar ist, wobei das Signal-Rausch-Verhältnis möglichst hoch sein sollte, und das eine hohe Stabilität der Speicherschichten aufweist.

Die Erfindung betrifft nun weiterhin ein optisches Aufzeichnungsmedium, enthaltend einen Träger sowie einen strahlungsempfindlichen, Farbstoff und gegebenenfalls Bindemittel enthaltende dünnen Beschichtungsfilm, wobei der Farbstoff die Formel I

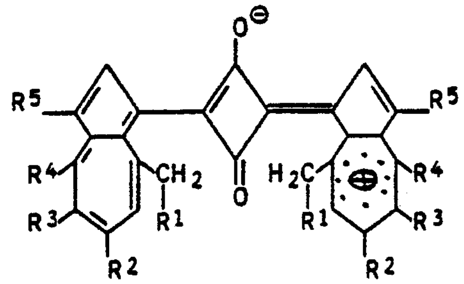

(I)

aufweist, in der

$R^1$ $C_1$-$C_{12}$-Alkyl, das gegebenenfalls durch Halogen, Amino, Hydroxy, $C_1$-$C_{12}$-Alkoxy, Phenyl, substituiertes Phenyl, Carboxyl, $C_1$-$C_{12}$-Alkoxycarbonyl, $C_1$-$C_{12}$-Halogenalkoxycarbonyl, $C_1$-$C_{12}$-Phenylalkoxycarbonyl, Cyano, $C_1$-$C_{12}$-Alkanoyloxy, Benzoyloxy, substituiertes Benzoyloxy und/oder den Rest

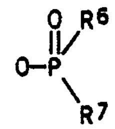

,

wobei $R^6$ und $R^7$ gleich oder verschieden sind und unabhängig voneinander jeweils für $C_1$-$C_4$-Alkyl oder Phenyl stehen, substituiert ist, Carboxyl, $C_1$-$C_{12}$-Alkoxycarbonyl, wobei die Alkylkette gegebenenfalls durch ein oder mehrere Sauerstoffatome unterbrochen ist, Carbamoyl oder $C_1$-$C_4$-Mono- oder Dialkylcarbamoyl und

$R^2$, $R^3$, $R^4$ und $R^5$ gleich oder verschieden sind und unabhängig voneinander jeweils Wasserstoff oder $C_1$-$C_{12}$-Alkyl, das gegebenenfalls durch Halogen, Amino, $C_1$-$C_{12}$-Alkoxy, Phenyl, substituiertes Phenyl, Carboxyl, $C_1$-$C_{12}$-Alkoxycarbonyl oder Cyano substituiert ist, bedeuten,

mit der Maßgabe, daß wenn $R^5$ Wasserstoff bedeutet, an einem oder beiden Azulenringen die Ringpositionen der Substituenten $CH_2$-$R^1$ und $R^4$ innerhalb eines Azulenrings auch gegenseitig vertauscht sein können und daß $R^1$ auch Wasserstoff bedeutet, wenn $R^5$ für Methyl oder Ethyl, das jeweils durch Phenyl oder substituiertes Phenyl substituiert ist, oder für $C_3$-$C_{12}$-Alkyl steht oder wenn mindestens einer der beiden Reste $R^2$ und $R^4$ für Phenyl oder substituiertes Phenyl steht.

Bevorzugt ist ein optisches Aufzeichnungsmedium, das Azulenquadratsäurefarbstoffe der Formel I enthält, in der $R^2$, $R^3$, $R^4$ und $R^5$ $C_1$-$C_6$-Alkyl bedeuten und $R^1$ die obengenannte Bedeutung besitzt.

Besonders bevorzugt ist ein optisches Aufzeichnungsmedium, das Azulenquadratsäurefarbstoffe der Formel I enthält, in der $R^2$ und $R^4$ jeweils Methyl und $R^3$ und $R^5$ jeweils Wasserstoff bedeuten und $R^1$ die obengenannte Bedeutung besitzt.

Ganz besonders bevorzugt ist ein optisches Aufzeichnungsmedium, das Azulenquadratsäurefarbstoffe der Formel I enthält, in der $R^2$ und $R^4$ jeweils Wasserstoff, $R^3$ Isopropyl und $R^5$ Methyl bedeuten und $R^1$ die obengenannte Bedeutung besitzt.

Als Träger kommen zweckmäßig transparente Träger, wie Glas oder Kunststoffe in Betracht. Geeignete Kunststoffe sind beispielsweise Poly(meth)acrylate, Polycarbonate, Polyester, Epoxide, Polyolefine (z.B. Polymethylpenten), Polyamid, Polyvinylchlorid, Polystyrol oder Polyvinylester.

Ein bevorzugtes Aufzeichungsmedium weist einen Träger aus Polycarbonat oder Poly(meth)acrylaten, insbesondere aber aus Polycarbonat auf.

Weiterhin bevorzugt ist ein optisches Aufzeichnungsmedium, das 1 bis 30 Gew.-%, bezogen auf den Farbstoff, an Bindemittel enthält.

Die neuen Azulenquadratsäurefarbstoffe der Formel I, insbesondere diejenigen, bei denen $R^1$ $C_1$-$C_{12}$-Alkyl, das durch $C_1$-$C_{12}$-Alkoxycarbonyl substituiert ist, bedeutet, zeigen die gleichen guten optischen Daten wie der bekannte Grundkörper V. Darüberhinaus sind bei den neuen Verbindungen die reinen Farbstoffschichten stabiler. Bislang wurde nämlich keine Rekristallisation der reinen Farbstoffschicht beobachtet und somit kann auf den Zusatz polymerer Bindemittel verzichtet werden. Außerdem ist auch die Lichtechtheit (Stabilität) deutlich größer als bei bekannten Methinfarbstoffen, so daß der Zusatz von Stabilisatoren zur Schichtrezeptur auf ein Minimum begrenzt werden kann. Von besonderem Vorteil ist auch die gute Löslichkeit der neuen Farbstoffe I in den meisten organischen Lösungsmitteln, so daß diese Farbstoffe direkt (ohne Schutzschicht) auf strukturierte Kunststoffsubstrate, insbesondere Polycarbonatsubstrate, aufgeschleudert werden können.

Wie oben ausgeführt, enthält die aufzuschleudernde Lösung vorzugsweise ein Bindemittel, um eine gute Langzeitstabilität des Aufzeichnungsmediums zu gewährleisten und vor allem die optimale Viskosität der aufzuschleudernden Lösung einzustellen. Vorzugsweise enthält die Lösung dabei 1 bis 30 Gew.%, bezogen auf den Feststoffgehalt der aufzuschleudernden Lösung, eines Bindemittels. Als Bindemittel kommen z.B. Polyorganosiloxane, Epoxide, Poly(meth)acrylate, Polystyrolhomo- und -copolymerisate, Polyvinylcarbazol, Polyvinylpyrrolidon, Polyimidazolcopolymere, Polyvinylestercopolymere, Polyvinylethercopolymere, Polyvinylidenchloridcopolymere, Acrylnitrilcopolymere, Polyvinylchlorid oder dessen Copolymere, Celluloseacetat oder Nitrocellulose in Betracht.

Ein bevorzugtes Aufzeichungsmedium weist ein Bindemittel auf Basis eines Vinylpyrrolidon-Vinylacetat-Copolymeren oder eines Polyvinylchlorid-Polyvinylether-Copolymeren auf.

Das erfindungsgemäße optische Aufzeichungsmedium wird zweckmäßig durch Aufschleudern einer Lösung, enthaltend organisches Lösungsmittel, Azulenquadratsäurefarbstoff I und gegebenenfalls Bindemittel hergestellt. Zweckmäßig weist die aufzuschleudernde Lösung dabei einen Feststoffgehalt von 1 bis 30 Gew.%, bezogen auf die Lösung, auf.

Geeignete Lösungsmittel sind z.B. Propanol, Isopropanol, Butanol, Diacetonalkohol, Methylethylketon, Toluol, Bromoform, 1,1,2-Trichlorethan oder deren Mischungen.

Gegebenenfalls kann die Lösung noch bis zu 10 Gew.-%, bezogen auf den Feststoffgehalt der aufzuschleudernden Lösung, an Additiven, z.B. Antioxidantien, Singlett-Sauerstoff-Quencher oder UV-Absorber enthalten.

Bevorzugt enthält die aufzuschleudernde Lösung bis zu 5 Gew.%, bezogen auf den Feststoffgehalt der aufzuschleudernden Lösung, eine Mischung von mehreren Antioxidantien, Singlett-Sauerstoff-Quenchern und UV-Absorbern. Bei Anwendung von solchen Antioxidantien, die ebenfalls im nahen Infrarot absorbieren, beispielsweise Nickeldithiolenkomplexe, wie sie z.B. in der DE-A 3 505 750, DE-A 3 505 751 oder in S. H. Kim, M. Matsuoka, M. Yomoto, Y. Tsuchiya u. T. Kitao, Dyes and Pigments, Bd. 8, S. 381-388 (1987), beschrieben sind, können vorzugsweise bis zu 10 Gew.%, bezogen auf den Feststoffgehalt der aufzuschleudernden Lösung, in der Lösung enthalten sein.

Unter Aufschleudern ist dabei das Aufbringen der Lösung auf den in Rotation befindlichen Träger, der zweckmäßig eine runde Form aufweist, zu verstehen. Es ist aber auch möglich, die Lösung auf den zunächst ruhenden Träger aufzubringen und ihn anschließend in Rotation zu versetzen. Das Aufgeben der Lösung auf den Träger erfolgt zweckmäßig mit einer Spritze oder Kapillaren oder mittels einer mechanischen Pumpe.

Die Rotation des Trägers erfolgt im allgemeinen mit einer Geschwindigkeit von 50 bis 7000 U/min, vorzugsweise 500 bis 5000 U/min, wobei das Aufschleudern der Lösung zweckmäßig bei geringerer Drehzahl (ca. 500 bis 2000 U/min) und das daran anschließende Trockenschleudern bei höherer Drehzahl (ca. 5000 bis 7000 U/min) vorgenommen wird. Die Schichtdicke der gegenüber Laserlicht empfindlichen Schicht beträgt 40 bis 160 nm, vorzugsweise 80 bis 120 nm. Sie ist abhängig von der Drehzahl, von der Konzentration und Viskosität der aufzuschleudernden Lösung sowie von der Temperatur.

Beim erfindungsgemäßen optischen Aufzeichnungsmedium liegt die gegenüber Laserlicht empfindliche Schicht in Form einer homogenen, dünnen, glatten Schicht vor, die eine hohe optische Qualität aufweist. So liegen die Reflektivitätswerte im allgemeinen in einem Bereich, der größer als 12 % ist.

Das neue Aufzeichungsmedium ist ferner bei der Wellenlänge der verwendeten Laserlichtquelle hinreichend empfindlich, d. h. bei Einstrahlung von Lichtpulsen von wenigen nJ Energieinhalt, die auf Brennpunktdurchmesser von $\leq 1\ \mu m$ fokussiert sind, bilden sich Pits aus, wobei ein ausgezeichnetes Signal-Rausch-Verhalten erzielt wird.

Als Laserlichtquelle eignen sich wegen der geringen Größe des Bauelementes, seines geringen Energiebedarfs und der Möglichkeit der direkten Modulation der optischen Ausgangsleistung durch Modulation des elektrischen Antriebstromes Festkörper-Injektionslaser, die im nahen Infrarot emittieren, vor allem der AlGaAs-Laser, der im Wellenlängenbereich zwischen etwa 750 und 900 nm arbeitet, besonders gut.

Die nachfolgenden Beispiele sollen die Erfindung näher erläutern.

A) Herstellung der Azulenderivate

Beispiel 1

Guajazulenpropionsäure

(Azulen-7-isopropyl-1-methyl-4-propionsäure) (IIb.9)

Zu einer Lösung von 19,8 g (0,10 mol) Guajazulen und 22,0 ml (0,16 mol) Diisopropylamin in 300 ml wasserfreiem Diethylether wurden unter Rühren und Argonatmosphäre bei -40 °C 70,0 ml (0,12 mol) 15 gew.%ige Lösung von n-Butyllithium in Hexan zugetropft. Man ließ die Temperatur der Lösung innerhalb von 30 Minuten unter Rühren auf 0 °C ansteigen, kühlte dann erneut auf -40 °C ab und tropfte langsam eine Lösung von 8,6 g (0,06 mol) Bromessigsäure in 50 ml wasserfreiem Ether zu. Die blaue Reaktionsmischung wurde innerhalb von 4 Stunden auf Raumtemperatur erwärmt und etwa 12 Stunden bei Raumtemperatur nachgerührt. Dann wurde mit 100 ml Eiswasser hydrolysiert und mit Ether solange das überschüssige bzw. unumgesetzte Guajazulen extrahiert, bis die organische Phase annähernd farblos war. Aus den vereinigten organischen Phasen wurden 7,5 g Guajazulen zurückgewonnen. Die wäßrige Phase wurde mit 300 ml Ether überschichtet und durch Zugabe von 2-n-Salzsäure die Guajazulenpropionsäure freigesetzt. Die organische Phase wurde abgetrennt, mit Wasser säurefrei gewaschen und über Natriumsulfat getrocknet. Nach Abziehen des Lösungsmittels erhielt man 12,3 g (80 % bez. auf Bromessigsäure) Guajazulenpropionsäure als blauen Kristallbrei, der direkt zur Veresterung eingesetzt werden kann (siehe Bsp. 2). Zur direkten Umsetzung der Guajazulenpropionsäure mit Quadratsäure zu Farbstoffen der Formel I (siehe Bsp. 4) war eine anschließende Säulenchromatographie an Kieselgel (Methylenchlorid/Aceton: 9/1) notwendig, um Spuren von Guajazulen (ca. 0,3 g) und von einem braunen Rückstand abzutrennen.

Ausbeute: 10,5 g (68 %); Schmp.: 139 - 140 °C.

IR (KBr): $\bar{\nu}$ = 3460 breit, 2961, 2925, 2864, 1699 (C=O)s, 1555, 1527, 1460, 1419, 1408, 1389, 1301, 1215, 921, 776 $cm^{-1}$; $^1H$-NMR ($CDCl_3$): $\sigma$ = 1,38 d(6H), 2,68 s(3H), 2,90 t(2H), 3,08 q(1H), 3,50 t(2H), 7,06 d(1H), 7,29 d(1H), 7,43 d(d)(1H), 7,64 d(1H), 8,20 d(1H); $^{13}C$-NMR ($CDCl_3$): $\sigma$ = 12,91, 24,72 (2C), 33,95, 35,27, 38,28, 112,06, 124,13, 125,58, 133,53, 135,26, 136,42, 136,52, 136,77, 140,40, 146,01, 179,02; MS: m/e = 256 ($M^{\oplus}$, 100 %), 241 ($M^{\oplus}$-$CH_3$, 75 %), 211, 195, 181, 165, 152, 141, 128, 115.

In analoger Weise wurden die in Tabelle 1 aufgeführten 4-Methyl-substituierten Guajazulen- und 4,6,8-Trimethylazulenalkylcarbonsäuren hergestellt.

Beispiel 2

Guajazulenpropionsäuremethylester

(Azulen-7-isopropyl-1-methyl-4-propionsäuremethylester) (IIb.10)

12,8 g (0,05 mol) Guajazulenpropionsäure (Beispiel 1), 12 ml Methanol und 0,3 g p-Toluolsulfonsäure wurden in 250 ml Tetrachlorkohlenstoff unter Rückfluß erhitzt. Die Reaktion, die durch Dünnschichtchromatographie verfolgt wurde, war nach ca. 6 Stunden beendet. Die Reaktionsmischung wurde dann auf Wasser gefällt, die organische Phase mit gesättigter Natriumhydrogencarbonatlösung, dann mit Wasser gewaschen und anschließend über Natriumsulfat getrocknet. Das hochviskose Rohprodukt (13,1 g, 97 %) wurde durch Säulenchromatographie an neutralem Kieselgel (Methylenchlorid/Aceton: 9/1) gereinigt.

Ausbeute: 12,0 g (89 %) blaues hochviskoses Öl.

UV ($CH_2Cl_2$): $\lambda$max = 300 nm, $\epsilon$ = 43130; IR (Film): $\nu$ = 2958, 2927, 1739 (C=O)s, 1555, 1461, 1435, 1388, 1363, 1195, 1170, 780 $cm^{-1}$; $^1H$-NMR ($CDCl_3$): $\sigma$ = 1,35 d(6H), 2,65 s(3H), 2,84 t(2H), 3,18 q(1H), 3,47 t(2H), 3,71 s(3H), 7,01 d(1H), 7,29 d(1H), 7,42 d(1H), 7,63 d(1H), 8,19 d(1H); d(1H), 7,29 d(1H), 7,43 d-(d)(1H), 7,64 d(1H), 8,20 d(1H); $^{13}C$-NMR ($CDCl_3$): $\sigma$ = 12,90 24,72 (2C), 33,31, 35,37, 38,27, 51,66, 112,14, 124,24, 125,50, 133,44, 135,24, 136,40, 136,74 (2C), 140,28, 146,47, 173,40; MS: m/e = 270 ($M^{\oplus}$, 100 %).

Beispiel 3

Guajazulenpropionsäureisopropylester

(Azulen-7-isopropyl-1-methyl-4-propionsäureisopropylester) (IIb.13)

Die Herstellung erfolgte analog Beispiel 2 mit 6,4 g (25 mmol) Guajazulencarbonsäure, jedoch wurde anstelle von Methanol Isopropanol verwendet. Die Umsetzung war nach 10 Stunden Reaktionszeit beendet.
Ausbeute: 5,3 g (71 %) blaues Öl.
IR (Film): $\nu$ = 2959, 2932, 1730 (C=O)s, 1556, 1464, 1387, 1372, 1260, 1181, 1146, 1108s, 982 $cm^{-1}$; $^1H$-NMR ($CDCl_3$): S = 1,24 d(8H), 1,38 d(6H), 2,70 s(3H), 2,83 t(2H), 3,12 q(1H), 3,51 t(2H), 5,07 q(1H), 7,3 d-(d) (2H), 7,35 s(1H), 7,72 s(1H), 8,26 s(1H).
$^{13}C$-NMR ($CDCl_3$): S = 12,86, 21,82 (2C), 24,71 (2C), 33,38, 35,99, 38,27, 67,76, 112,24, 124,30, 125,43, 133,29, 135,12, 136,49, 136,72, 136,89, 140,17, 146,69, 172.41.
MS: m/e = 298 ($M^{\oplus}$, 100 %).

Analog Beispiel 2 und 3 wurden die in Tabelle 1 aufgeführten 4-Methylsubstituierten Guajazulen- und 4,6,8-Trimethylazulen-alkylcarbonsäureester hergestellt.

Beispiel 4

Guajazulenpropanol

(7-Isopropyl-1-methyl-4-(3-hydroxypropyl)azulen) (IIb.45)

10 g (37 mmol) Guajazulenpropionsäuremethylester (Beispiel 2) wurden mit 1,5 g (39 mmol) Lithiumaluminiumhydrid in 200 ml wasserfreiem Ether reduziert. Nach Beendigung der Reaktion (DC-Kontrolle) wurde die Reaktionsmischung mit wenig Methanol versetzt, mit Wasser aufgearbeitet und das Rohprodukt über eine kurze Kieselgelsäule filtriert.
Ausbeute: 8,5 g (95 %).
MS: m/e = 242 ($M^{\oplus}$, 20 %), 198 (n-$C_2H_4O$, 100 %), 183 (40 %), 43.

Beispiel 5

4,6-Dimethyl-8-(3-hydroxypropyl)azulen (IIa.16)

5,0 g (20,7 mmol) 4,6-Dimethyl-8-(3-propionsäureethylester)azulen (IIa.10) wurden mit 0,8 g (21 mmol) Lithiumaluminiumhydrid in 100 ml wasserfreiem Tetrahydrofuran reduziert. Nach beendeter Reaktion (DC-Kontrolle) wurde die Reaktionsmischung mit wenig Methanol versetzt, mit Wasser aufgearbeitet und das Rohprodukt (4,1 g) an Kieselgel chromatographiert.
Ausbeute: 2,5 g (56 %).
$^1H$-NMR ($CDCl_3$): S = 1,65 s breit (1H,OH), 2,10 q(2H), 2,63 s(3H), 2,86 s(3H), 3,29 t(2H), 3,72 t(2H), 7,02 s(1H), 7,06 s(1H), 7,36 m(1H), 7,64 s(1H).
MS: m/e = 214 ($M^{\oplus}$, 25 %), 170 (M-$C_2H_4O$, 100 %), 155 ($M^{\oplus}$-$C_3H_6OH$, 60 %), 141, 128, 115, 43 (25 %).

Beispiel 6

3-(7-Isopropyl-1-methyl)-azulen-4-yl-2-ethyl-propionsäure

Zu einer Lösung von 19,8 g (0,10 mol) Guajazulen und 22,0 ml (0,16 mol) Diisopropylamin in 300 ml wasserfreiem Methyl-tert.-butylether wurden unter Rühren und Argonatmosphäre bei -10 °C 70,0 ml (0,12 mol) 15 gew.%ige Lösung von n-Butyllithium in Hexan zugetropft. Man ließ die Temperatur der Lösung innerhalb von 30 Minuten unter Rühren auf 0 °C ansteigen, kühlte dann erneut auf -5 °C ab und tropfte langsam eine Lösung von 12,4 g (0,07 mol) DL-2-Brombuttersäure in 50 ml wasserfreiem Methyl-tert.-butylether zu. Die blaue Reaktionsmischung wurde innerhalb von 4 Stunden auf Raumtemperatur erwärmt und etwa 18 Stunden bei Raumtemperatur nachgerührt. Dann wurde mit 100 ml Eiswasser hydrolysiert und

mit Ether solange das überschüssige bzw. unumgesetzte Guajazulen extrahiert, bis die organische Phase annähernd farblos war. Die wäßrige Phase wurde mit 300 ml Methyl-tert.-butylether überschichtet und durch Zugabe von 2 N Salzsäure die 3-(7-Isopropyl-1-methyl)-azulen-4-yl-2-ethyl-propionsäure freigesetzt. Die organische Phase wurde abgetrennt, mit Wasser säurefrei gewaschen und über Natriumsulfat getrocknet. Nach Abziehen des Lösungsmittels erhielt man 13,1 g (60 % bez. auf DL-2-Brombuttersäure) 3-(Azulen-7-isopropyl-1-methyl-4)-2-ethyl-propionsäure als blaues Öl, das direkt zur Veresterung eingesetzt werden kann (siehe Bsp. 2). Zur direkten Umsetzung der 3-(Azulen-7-isopropyl-1-methyl-4)-2-ethyl-propionsäure mit Quadratsäure zu Farbstoffen der Formel I war eine anschließende Säulenchromatographie an Kieselgel (Methylenchlorid/Aceton: 9/1) notwendig, um Spuren von Guajazulen (ca. 0,3 g) und von DL-2-Brombuttersäure abzutrennen.

Physikalische Daten:

IR (KBr): $\bar{\nu}$ = 3064 (OH); 2962, 2934, 2876 (CH), 1706 s (C=O); 1555, 1461, 1422, 1387, 1285 $cm^{-1}$;
$^1$H-NMR ($CDCl_3$): $\delta$ = 0.98 t(3H), 1.34 d(6H), 1.70 ddq(2H), 2.65 s(3H), 3.00 m(1H), 3.05 q(1H), 3.25 ABM-(1H), 3.55 ABM(1H), 6.98, 7.35 AB(2H; 7,8H), 7.28, 7.59 AB (2H; 4,5H), 8.19 s(1H), 11.45 s breit (1H; $CO_2H$)→
$^{13}$C-NMR ($CDCl_3$): $\delta$ = 11.66, 12.84, 24.68 (2C), 25.40, 38.29, 39.98, 48.51, 112.63, 124.74, 125.50, 133.28, 134.77, 136.79, 136.87, 137.63, 140.28, 145.16, 181.83;
MS: m/e = 284 ($M^{\oplus}$, 90 %), 269, 198 (100 %).

Beispiel 7

3-(7-Isopropyl-1-methyl)-azulen-4-yl-2-ethyl-propionsäure-n-butylester

10,0 g (0,035 mol) 3-(7-Isopropyl-1-methyl)-azulen-4-yl-2-ethyl-propionsäure (Beispiel 6), 20 ml n-Butanol und 0,3 g p-Toluolsulfonsäure wurden in 100 ml Tetrachlorkohlenstoff unter Rückfluß erhitzt. Nach beendeter Reaktion (Reaktionskontrolle durch Dünnschichtchromatographie; ca. 6 Stunden) wurde die Reaktionsmischung dann auf Wasser gefällt, die organische Phase mit gesättigter Natriumhydrogencarbonatlösung, dann mit Wasser gewaschen und anschließend über Natriumsulfat getrocknet. Das hochviskose Rohprodukt (8,6 g, 72 %) wurde durch Säulenchromatographie an Kieselgel (Methylenchlorid) gereinigt.

Physikalische Daten:

IR (KBr): $\bar{\nu}$ = 2981s (CH), 2871s, 1731s (C=O); 1460s, 1365, 1219, 1185, 1069s (C-O), 1031, 910s $cm^{-1}$;
$^1$H-NMR ($CDCl_3$): $\delta$ = 0.85 t(3H), 0.95 t(3H), 1.24 ps.q(2H), 1.38 d(6H), 1.45 ps.q(2H), 1.72 dq(2H), 2.65 s-(3H), 2.90 ps.t(1H), 3.06 q(1H), 3.28, 3.45 ABM(2H), 3.98 t(2H), 6.96, 7.38 AB(2H; 7,8H), 7.26, 7.60 AB(2H; 4,5H), 8.18 s(1H);
$^{13}$C-NMR ($CDCl_3$): $\delta$ = 11.79, 12.84, 13.58, 19.17, 24.72 (2C), 25.90, 30.84, 38.34, 40.49, 48.96, 64.15, 112.65, 124.86, 125.42, 133.21, 134.77, 136.74, 137.76, 140.17, 145.77, 175.58, 179.05;
MS: m/e = 340 ($M^{\oplus}$, 100 %), 325, 312, 297, 283, 267, 257, 239, 223, 209, 198 (95 %), 183, 167, 155.

Beispiel 8

3-(7-Isopropyl-1-methyl)-azulen-4-yl-2-ethyl-propanol

Eine Lösung von 14,2 g (0,05 ml) 3-(7-Isopropyl-1-methyl)-azulen-4-yl-2-ethyl-propionsäure in 100 ml Tetrahydrofuran wurde portionsweise mit 2,8 g Lithiumalanat versetzt und 2 Stunden bei Raumtemperatur gerührt. Danach wurde die Reaktionsmischung mit insgesamt 150 ml Wasser hydrolysiert und mit Methylenchlorid mehrmals ausgeschüttelt. Das nach Trocknen der org. Phase über Natriumsulfat und

Abziehen des Lösungsmittels unter vermindertem Druck verbleibende Rohprodukt wurde durch Säulenchromatographie (Kieselgel; Methylenchlorid, Methanol) gereinigt. Man erhielt 8,3 g (66 %) 3-(7-Isopropyl-1-methyl)-azulen-4-yl-2-ethyl-propanol als tiefblaues Öl.

Physikalische Daten:

IR (KBr): $\bar{\nu}$ = 3350 breit (OH); 2958, 2927, 2872 (CH); 1553, 1461, 1421, 1387 $cm^{-1}$;
$^1H$-NMR ($CDCl_3$): $\delta$ = 0.98 t(3H), 1.35 d(6H), 1.49 dq(2H), 2.00 m(1H), 2.66 s(3H), 3.05 q(1H), 3.08, 3.18 ABM(2H), 3.50 mc(2H), 6.98, 7.36 AB(2H; 7,8H), 7.32, 7.62 AB (2H; 4,5H), 8.19 s(1H);
$^{13}C$-NMR ($CDCl_3$): $\delta$ = 11.46, 12.90, 24.39, 24.73 (2C), 38.23, 39.65, 44.34, 64.71, 112.58, 125.25 (2C), 133.17, 134.82, 136.10, 136.45, 137.98, 139.80, 147.86;
MS: m/e = 270 ($M^{\oplus}$, 50 %), 198 (100 %).

Beispiel 9

3-(7-Isopropyl-1-methyl)-azulen-4-yl-propanol

Eine Lösung von 13,5 g (0,05 mol) 3-(7-Isopropyl-1-methyl)-azulen-4-yl-propionsäure wurden wie in Beispiel 8 beschrieben mit 3,0 g Lithiumalanat in 100 ml Tetrahydrofuran umgesetzt und aufgearbeitet. Man erhielt nach Säulenchromatographie (Kieselgel; Methylenchlorid, Methanol) 6,5 g (52 %) 3-(7-Isopropyl-1-methyl)-azulen-4-yl-propanol als blaues Öl.

Beispiel 10

3-(7-Isopropyl-1-methyl)-azulen-4-yl-n-propanylpivalinat

Zu einer Lösung von 9,6 g (0,04 mol) Azulen-7-isopropyl-1-methyl-4-propanol und 40 ml Triethylamin in 200 ml Tetrahydrofuran wurden bei Raumtemperatur 9,6 g (0,08 mol) Pivalinsäurechlorid in 20 ml Tetrahydrofuran langsam zugetropft. Die Reaktionsmischung wurde 6 Stunden nachgerührt, dann auf 200 ml Wasser gegeben und mit Methylenchlorid mehrmals extrahiert. Nach Trocknen der organischen Phase über Natriumsulfat und Abziehen des Lösungsmittels verblieben 12,1 g (93 %) 3-(7-Isopropyl-1-methyl)-azulen-4-yl-n-propanylpivalinat als dunkelblaues Öl, das ohne Reinigung zur Farbstoffreaktion (analog zu Beispiel 8) eingesetzt wird.

Beispiel 11

3-(7-Isopropyl-1-methyl)-azulen-4-yl-n-propanyl-diphenyl

Zu einer Lösung von 8,0 g (0,03 mol) Azulen-7-isopropyl-1-methyl-4-propanol und 20 ml Triethylamin in 100 ml Tetrahydrofuran wurden bei Raumtemperatur 15,6 g (0,066 mol) Diphenylphosphinsäurechlorid in 20 ml Tetrahydrofuran langsam zugetropft. Der Ansatz wurde 6 Stunden nachgerührt und, wie in Beispiel 10 beschrieben, aufgearbeitet. Nach Filtration des Rohproduktes über Kieselgel (Methylenchlorid) erhielt man 12,2 g (83 %) 3-(7-Isopropyl-1-methyl)-azulen-4-yl-n-propanyl-diphenylphosphinat als tiefblaues Öl.

Physikalische Daten:

IR (KBr): $\bar{\nu}$ = 3060, 2958 (CH); 1439 s(PO); 1228s, 1130s, 1013s, 997s, 729, 697, 560, 536 $cm^{-1}$;
$^1H$-NMR ($CDCl_3$): $\delta$ = 1.37 d(6H), 2.28 mc(2H), 2.68 s(3H), 3.08 q(1H), 3.31 ps.t(2H), 4.15 ps.q(2H), 7.00, 7.50 AB(2H; H-7.8), 7.28, 7.63 AB (2H; 4.5-H), 7.45 m(6H; P-PhH), 7.85 m(4H; Ph-H), 8.20 s(1H);
$^{31}P$-NMR ($CDCl_3$): $\delta$ = 32.10 ppm;
MS: m/e = 442 ($M^{\oplus}$, 30 %), 224, 209, 198, 183, 181.

Beispiel 12

1-(p-Methoxybenzyl)-4,6,8-trimethyl-azulen

3,0 g (0,04 mol) Trimethylazulen in 40 ml abs. Diethylether wurden mit 4,0 g 85 gew.%iger etherischer $HBF_4$-Lösung versetzt und bis zur Entfärbung gerührt. Der entstandene Niederschlag wurde abgesaugt, mit Ether gewaschen und danach mit 28 g p-Methoxybenzaldehyd auf 90 bis 100 °C erwärmt. Es wurden 100 ml Ether zugegeben, der anfallende rote Niederschlag abgesaugt und mit Diethylether gewaschen. Der Niederschlag wurde dann mit 200 ml Diethylether suspendiert und unter Rühren portionsweise mit 3,5 g Lithiumalanat versetzt. Nach beendeter Zugabe wurde mit Wasser und 2 N Schwefelsäure hydrolysiert. Die org. Phase wurde abgetrennt und über Natriumsulfat getrocknet. Der nach Abziehen des Lösungsmittels verbleibende kristalline Rückstand wurde durch Filtration an Kieselgel (Methylenchlorid) gereinigt. Man erhielt 1,5 g (13 %, bezogen auf Trimethylazulen) 1-(p-Methoxybenzyl)-4,6,8-trimethyl-azulen als blaue Kristalle.

In analoger Weise werden die in Tabelle 1 aufgeführten Azulenderivate der Formel

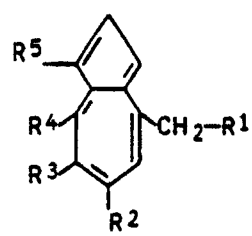

erhalten.

Tabelle 1

| Verb.-Nr. | $R^1$ | $R^2$ | $R^3$ | $R^4$ | $R^5$ |
|---|---|---|---|---|---|
| II.1 | $CH_2CO_2sC_4H_9$ | H | $CH(CH_3)_2$ | H | $CH_3$ |
| II.2 | $CH_2CO_2CH_2$— 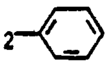 | H | $CH(CH_3)_2$ | H | $CH_3$ |
| II.3 | $CH_2CO_2CH_2CH_2Br$ | H | $CH(CH_3)_2$ | H | $CH_3$ |
| II.4 | $CHCO_2CH_3$<br>\|<br>$CH_3$ | H | $CH(CH_3)_2$ | H | $CH_3$ |
| II.5 | $CHCO_2nC_4H_9$<br>\|<br>$CH_3$ | H | $CH(CH_3)_2$ | H | $CH_3$ |
| II.6 | $CHCO_2CH_3$<br>\|<br>$C_2H_5$ | H | $CH(CH_3)_2$ | H | $CH_3$ |
| II.7 | $CHCO_2C_2H_5$<br>\|<br>$C_2H_5$ | H | $CH(CH_3)_2$ | H | $CH_3$ |
| II.8 | $CHCO_2nC_3H_7$<br>\|<br>$C_2H_5$ | H | $CH(CH_3)_2$ | H | $CH_3$ |
| II.9 | $CHCO_2iC_3H_7$<br>\|<br>$C_2H_5$ | H | $CH(CH_3)_2$ | H | $CH_3$ |
| II.10 | $CHCO_2nC_4H_9$<br>\|<br>$C_2H_5$ | H | $CH(CH_3)_2$ | H | $CH_3$ siehe Bsp.7 |
| II.11 | $CHCO_2sC_4H_9$<br>\|<br>$C_2H_5$ | H | $CH(CH_3)_2$ | H | $CH_3$ |
| II.12 | $CHCO_2C_4H_5$<br>\|<br>$C_6H_5$ | H | $CH(CH_3)_2$ | H | $CH_3$ |
| II.13 | $CH_2OC(O)CH_3$ | H | $CH(CH_3)_2$ | H | $CH_3$ |
| II.14 | $(CH_2)_2OC(O)CH_3$ | H | $CH(CH_3)_2$ | H | $CH_3$ |
| II.15 | $(CH_2)_2OC(O)C(CH_3)_3$ | H | $CH(CH_3)_2$ | H | $CH_3$ siehe Bsp.10 |
| II.16 | $(CH_2)_2OC(O)C_9H_{19}$ | H | $CH(CH_3)_2$ | H | $CH_3$ |
| II.17 | $CH_2OC(O)$— 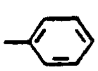 | H | $CH(CH_3)_2$ | H | $CH_3$ |
| II.18 | $(CH_2)_2OC(O)$— 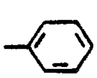 | H | $CH(CH_3)_2$ | H | $CH_3$ |
| II.19 | $(CH_2)_2OC(O)$— 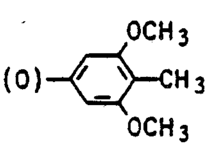 | H | $CH(CH_3)_2$ | H | $CH_3$ |

Tabelle 1 (Forts.)

| Verb.-Nr. | $R^1$ | $R^2$ | $R^3$ | $R^4$ | $R^5$ |
|---|---|---|---|---|---|
| II.20 | 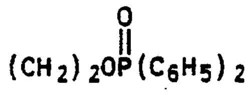 | H | $CH(CH_3)_2$ | H | $CH_3$ siehe Bsp.11 |
| II.21 | 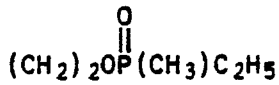 | H | $CH(CH_3)_2$ | H | $CH_3$ |
| II.22 | 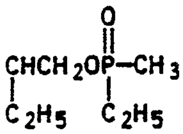 | H | $CH(CH_3)_2$ | H | $CH_3$ |
| II.23 | 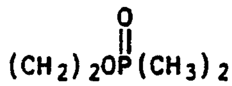 | H | $CH(CH_3)_2$ | H | $CH_3$ |
| II.24 | $(CH_2)_2OCH_3$ | H | $CH_3$ | H | $CH_3$ |
| II.25 | $CO_2C_2H_5$ | $CH_3$ | H | $CH_3$ | H |
| II.26 | $CO_2nC_3H_7$ | $CH_3$ | H | $CH_3$ | H |
| II.27 | $CO_2iC_3H_7$ | $CH_3$ | H | $CH_3$ | H |
| II.28 | H | $CH_3$ | H | $CH_3$ | $CH(CH_3)_2$ |
| II.29 | H | $CH_3$ | H | $CH_3$ | 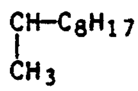 |
| II.30 | H | $CH_3$ | H | $CH_3$ | 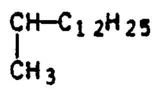 |
| II.31 | H | $CH_3$ | H | $CH_3$ | 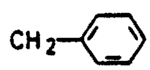 |
| II.32 | H | $CH_3$ | H | $CH_3$ | 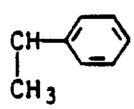 |
| II.33 | H | $CH_3$ | H | $CH_3$ | 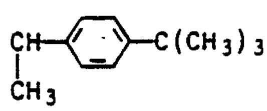 |
| II.34 | H | $CH_3$ | H | $CH_3$ | 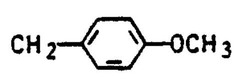 siehe Bsp. 12 |
| II.35 | H | $CH_3$ | H | $CH_3$ | 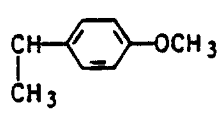 |
| II.36 | H | $CH_3$ | H | $CH_3$ | 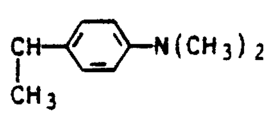 |

Tabelle 1 (Forts.)

| Verb.-Nr. | $R^1$ | $R^2$ | $R^3$ | $R^4$ | $R^5$ |
|---|---|---|---|---|---|
| II.37 | H | $CH_3$ | H | $CH_3$ | 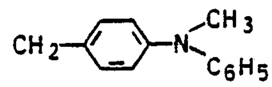 |
| II.38 | H | $CH_3$ | H | $CH_3$ | 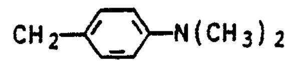 |
| II.39 | H | $CH_3$ | H | $CH_3$ | 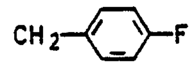 |
| II.40 | H | 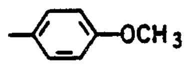 | H | $CH_3$ | H |
| II.41 | H | 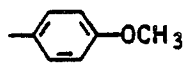 | H | 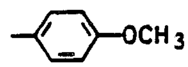 | H |

Tabelle 2: Zusammenstellung der verwendeten Azulenderivate der obengenannten Formeln IIa und IIb und Charakterisierung der neuen Verbindungen

| Verb.-Nr. | $R^1$ | Bem.: Literaturzitate[1)] bzw. Charakterisierung der neuen Verbindungen |
|---|---|---|
| IIa.1 | H | Referenzsubstanz: 4.6.8-Trimethylazulen (Fp.: 78 - 80 °C) |
| IIa.2 | $CH_3$ | $C_{14}H_{16}$ (184,28); MS: m/e = 184 ($M^{\oplus}$, 100 %), 169, 155, 154. |
| IIa.3 | $CH(CH_3)_2$ | $C_{16}H_{20}$ (212,34); MS: m/e = 212 ($M^{\oplus}$), 197, 43. |
| IIa.4 | $C_4H_9$ | $C_{17}H_{22}$ (226,36); MS: m/e = 226 ($M^{\oplus}$, 100 %), 211, 196, 154. |
| IIa.5 | $CH_2C_6H_5$ | K. Hafner et al., Liebigs Ann. 650, 80 (1961), (HW[1)], S. 338); $C_{20}H_{21}$ (261,39); MS: m/e = 261 ($M^{\oplus}$, 20 %), 246 ($M^{\oplus}$—$CH_3$), 184 ($M^{\oplus}$—$C_6H_5$), 170 ($M^{\oplus}$—$CH_2C_6H_5$), 91 ($C_7H_7$, 100 %). |
| IIa.6 | $CO_2H$ | K. Hafner et al., Liebigs Ann. 650, 80 (1961), (HW[1)], S. 341); Schmp.: 121 - 122 °C $C_{15}H_{14}O_2$ (226,28); MS: m/e = 226 ($M^{\oplus}$, 100 %); IR: $\bar{\nu}$ = 1698 (C=O) $cm^{-1}$. |
| IIa.7 | $CO_2CH_3$ | K. Hafner et al., Liebigs Ann. 650, 80 (1961), (HW[1)], S. 341); Schmp.: 43 - 44 °C $C_{16}H_{16}O_2$ (240,30); MS: m/e = 240 ($M^{\oplus}$, 100 %), 225, 210, 194, 166, 59; IR: $\bar{\nu}$ = 1732 (C=O) $cm^{-1}$. |
| IIa.8 | $CO_2C_4H_9$ | $C_{19}H_{25}O_2$ (285,41); MS: m/e = 285 ($M^{\oplus}$), 270, 228, 212, 184, 101, 73; IR: $\bar{\nu}$ = 1731 (C=O) $cm^{-1}$. |
| IIa.9 | $CH_2CO_2H$ | R. Neidlein u. W. Kramer, Helv. Chim. Acta 65, 280 (1982); Schmp.: 90 - 92 °C |
| IIa.10 | $CH_2CO_2CH_3$ | violettes Öl; IR (Film): ν = 3090, 3063, 2985, 2945, 1737 (C=O)s, 1576, 1543, 1488, 1435, 1322, 1211, 1196, 1170 (C-O), 848, 735 $cm^{-1}$; $^1H$-NMR ($CDCl_3$): δ = 2,59 s(3H), 2,81 t(2H), 2,82 s(3H), 3,50 t(3H), 3,66 s(3H), 7,01 s(1H), 7,04 s(1H), 7,37 d(1H), 7,42 d(1H), 7,68 t(1H); $^{13}C$-NMR ($CDCl_3$): δ = 25,10, 28,67, 34,23, 35,82, 51,66, 115,37, 116,37, 126,20, 127,38, 132,94, 135,47, 136,20, 145,63, 146,56, 147,75, 173,26; MS: m/e = 242 ($M^{\oplus}$, 100 %), 227 ($M^{\oplus}$—$CH_3$, 8 %) 211 ($M^{\oplus}$—$OCH_3$, 15 %) 183 ($M^{\oplus}$—$CO_2CH_3$, 50 %) 168, 153, 141, 43 ($CH_3CO^{\oplus}$, 40 %). |

1) HW: Houben-Weyl: Methoden der organ. Chemie, Bd. 5, Teil 2c, Thieme Verlag Stuttgart, New York 1985.

Fortsetzung - Tabelle 2

| Verb.-Nr. | $R^1$ | Bem.: Literaturzitate[1] bzw. Charakterisierung der neuen Verbindungen |
|---|---|---|
| IIa.11 | $CH_2CO_2C_2H_5$ | $C_{17}H_{20}O_2$ (256,35); MS: m/e = 256 ($M^{\oplus}$, 100 %); IR: $\bar{\nu}$ = 2968, 1733 s(C=O), 1576, 1544, 1436, 1371, 1276, 1179, 1158, 1034, 752 $cm^{-1}$. $^1H$-NMR ($CDCl_3$): $\delta$= 1,24 t(3H), 2,61 s(3H), 2,82 q(2H), 2,86 s(3H), 3,50 t(2H), 4,15 q(2H), 7,04 s(1H), 7,06 s(1H), 7,34 d(1H), 7,39 d(1H), 7,65 t(1H); $^{13}C$-NMR ($CDCl_3$): $\delta$ = 14,26, 25,03, 28,64, 34,32, 36,21, 60,49, 115,62, 116,53, 126,20, 127,35, 133,06, 135,84, 136,55, 145,57, 146,41, 147,96, 172,81. |
| IIa.12 | $CH_2CO_2nC_3H_7$ | $C_{18}H_{22}O_2$ (270,37); MS: m/e= 270 ($M^{\oplus}$); IR: $\bar{\nu}$ = 2967, 1733 s(C=O), 1576, 1544, 1463, 1436, 1276, 1211, 1177, 752 $cm^{-1}$. $^1H$-NMR ($CDCl_3$): $\delta$= 0,93 t(3H), 1,66 q(2H), 2,60 s(3H), 2,85 q(2H), 2,86 s(3H), 3,52 t(2H), 4,08 q(2H), 7,04 s(1H), 7,07 s(1H), 7,35 d(1H), 7,40 d(1H), 7,67 t(1H); $^{13}C$-NMR ($CDCl_3$): $\delta$ = 10,34, 22,09, 25,04, 28,64, 34,33, 36,17, 66,21, 115,57, 116,49, 126,18, 127,35, 133,03, 135,78, 136,50, 145,58, 146,43, 147,95, 172,90. |
| IIa.13 | $CH_2CO_2iC_3H_7$ | $C_{18}H_{22}O_2$ (270,37); MS: m/e= 270 ($M^{\oplus}$, 100 %); IR: $\bar{\nu}$ = 1732 (C=O) $cm^{-1}$. $^1H$-NMR ($CDCl_3$): $\delta$ = 1,21 d(6H), 2,59 s(3H), 2,80 t(2H), 2,83 s(3H), 3,49 t(2H), 5,04 q(1H), 7,03 s(1H), 7,06 s(1H), 7,34 d(1H), 7,40 d(1H), 7,64 t(1H); $^{13}C$-NMR ($CDCl_3$): $\delta$ = 21,86 (2C), 25,02, 28,63, 34,31, 36,49, 67,86, 115,61, 116,47, 126,19, 127,31, 133,00, 135,82, 136,51, 145,55, 146,37, 148,03, 172,36. |
| IIa.14 | $CH_2CO_2C_4H_9$ | $C_{19}H_{24}O_2$ (284,40); MS: m/e= 284 ($M^{\oplus}$, 100 %); IR: $\bar{\nu}$ = 1730 (C=O) $cm^{-1}$. |
| IIa.15 | $CH_2CO_2C_8H_{17}$ | $C_{23}H_{32}O_2$ (340,51); MS: m/e= 340 ($M^{\oplus}$); IR: $\bar{\nu}$ = 1730 (C=O) $cm^{-1}$. |
| IIa.16 | $(CH_2)_2OH$ | siehe Beispiel 5 |

[1] HW: Houben-Weyl: Methoden der organ. Chemie, Bd. 5, Teil 2c, Thieme Verlag Stuttgart, New York 1985.

Fortsetzung - Tabelle 2

| Verb.-Nr. | $R^1$ | Bem.: Literaturzitate[1] bzw. Charakterisierung der neuen Verbindungen |
|---|---|---|
| IIa.17 | $(CH_2)_2CO_2H$ | $C_{16}H_{18}O_2$ (242,34); MS: m/e = 242 ($M^{\oplus}$, 100 %); IR: $\bar{\nu}$ = 2957, 2924, 1695 (C=O)s, 1466, 1434, 1416, 1287, 1274, 1207, 784 $cm^{-1}$; $^1H$-NMR ($CDCl_3$): $\delta$ = 2,16 h(2H), 2,42 t(2H), 2,57 s(3H), 2,82 s(3H), 3,20 t(2H), 6,99 s(2H), 7,34 d(1H), 7,39 d(1H), 7,64 t(1H); $^{13}C$-NMR ($CDCl_3$): $\delta$ = 24,99, 26,48, 28,62, 33,88, 38,10, 115,75, 116,43, 126,28, 127,11, 132,82, 136,17, 136,38, 145,45, 146,23, 148,80, 179,44. |
| IIa.18 | $(CH_2)_2CO_2CH_3$ | $C_{17}H_{20}O_2$ (256,35); MS: m/e = 256 ($M^{\oplus}$, 100 %); IR: $\bar{\nu}$ = 1729 (C=O) $cm^{-1}$. |
| IIa.19 | $(CH_2)_2CO_2C_2H_5$ | $C_{18}H_{22}O_2$ (270,37); MS: m/e = 270 ($M^{\oplus}$, 100 %); IR: $\bar{\nu}$ = 1730 (C=O) $cm^{-1}$. |
| IIa.20 | $(CH_2)_2CO_2iC_3H_5$ | $C_{19}H_{24}O_2$ (284,40); MS: m/e = 284 ($M^{\oplus}$, 100 %); IR: $\bar{\nu}$ = 1733 (C=O) $cm^{-1}$. |
| IIa.21 | $(CH_2)_2CO_2C_4H_9$ | $C_{20}H_{26}O_2$ (298,43); MS: m/e = 298 ($M^{\oplus}$, 100 %); IR: $\bar{\nu}$ = 1731 (C=O) $cm^{-1}$. |
| IIa.22 | $(CH_2)_3OH$ | $C_{16}H_{20}O_2$ (228,34); MS: m/e = 228 ($M^{\oplus}$), 211; IR: $\bar{\nu}$ = 3520 (OH) $cm^{-1}$. |
| IIa.23 | $(CH_2)_4CO_2H$ | $C_{18}H_{22}O_2$ (270,37); MS: m/e= 270 ($M^{\oplus}$); IR: $\bar{\nu}$ = 2959, 2926, 1697 (C=O)s $cm^{-1}$. |
| IIa.24 | $(CH_2)_4CO_2CH_3$ | $C_{18}H_{24}O_2$ (284,40); MS: m/e= 284 ($M^{\oplus}$); IR: $\bar{\nu}$ = 1732 (C=O) $cm^{-1}$. |
| IIa.25 | $(CH_2)_5CO_2H$ | $C_{19}H_{24}O_2$ (284,40); MS: m/e= 284 ($M^{\oplus}$); IR: $\bar{\nu}$ = 2957, 2925, 1696 (C=O)s $cm^{-1}$. |
| IIa.26 | $(CH_2)_5CO_2CH_3$ | $C_{20}H_{26}O_2$ (298,43); MS: m/e= 298 ($M^{\oplus}$); IR: $\bar{\nu}$ - 1730 (C=O) $cm^{-1}$. |

1) HW: Houben-Weyl: Methoden der organ. Chemie, Bd. 5, Teil 2c, Thieme Verlag Stuttgart, New York 1985.

Fortsetzung - Tabelle 2

| Verb.-Nr. | $R^1$ | Bem.: Literaturzitate[1] bzw. Charakterisierung der neuen Verbindungen |
|---|---|---|
| IIa.27 | $(CH_2)_9CO_2H$ | $C_{23}H_{32}O_2$ (340,51); MS: m/e= 340 ($M^{\oplus}$); IR: $\bar{\nu}$ = 2958, 2927, 1697 (C=O)s $cm^{-1}$. |
| IIa.28 | $(CH_2)_9CO_2CH_3$ | $C_{24}H_{34}O_2$ (354,54); MS: m/e= 354 ($M^{\oplus}$); IR: $\bar{\nu}$ = 1733 (C=O) $cm^{-1}$. |
| IIb.29 | H | Referenzsubstanz: Gujazulen (Fp.: 29 - 30 °C). |
| IIb.30 | $CH_3$ | K. Hafner, H. Pelster u. H. Patzelt, Liebigs Ann. 650, 80 (1961); (HW [1]), S. 336f); $C_{16}H_{20}$ (212,34); MS: m/e = 212 ($M^{\oplus}$, 100 %). |
| IIb.31 | $CH(CH_3)_2$ | $C_{18}H_{24}$ (240,39); MS: m/e = 240 ($M^{\oplus}$, 100 %). |
| IIb.32 | $C_4H_9$ | $C_{19}H_{26}$ (254,42); MS: m/e = 254 ($M^{\oplus}$, 100 %). |
| IIb.33 | $CH_2C_6H_5$ | $C_{22}H_{24}$ (288,43); MS: m/e = 288 ($M^{\oplus}$), 91 ($C_7H_7^{\oplus}$, 100 %), |
| IIb.34 | $CO_2H$ | K. Hafner et al., Liebigs Ann. 650, 80 (1961), (HW[1]), S. 341); Schmp.: 102-103°C; $C_{16}H_{18}O_2$ (242,32); MS: m/e = 242 ($M^{\oplus}$, 100 %); IR: $\bar{\nu}$ = 1702 (C=O) $cm^{-1}$. |
| IIb.35 | $CO_2CH_3$ | $C_{17}H_{20}O_2$ (256,35); MS: m/e = 256 ($M^{\oplus}$, 100 %); IR: $\bar{\nu}$ = 1731 (C=O) $cm^{-1}$. |
| IIb.36 | $CO_2C_4H_9$ | $C_{20}H_{26}O_2$ (298,43); MS: m/e = 298 ($M^{\oplus}$, 100 %); IR: $\bar{\nu}$ = 1731 (C=O) $cm^{-1}$. |
| IIb.37 | $CH_2CO_2H$ | $C_{17}H_{20}O_2$ (256,35); MS: m/e = 256 ($M^{\oplus}$, 100 %); IR: $\bar{\nu}$ = 1704 (C=O) $cm^{-1}$. |
| IIb.38 | $CH_2CO_2CH_3$ | $C_{18}H_{22}O_2$ (270,37); MS: m/e = 270 ($M^{\oplus}$, 100 %); IR: $\bar{\nu}$ = 1735 (C=O) $cm^{-1}$. |
| IIb.39 | $CH_2CO_2C_2H_5$ | $C_{19}H_{24}O_2$ (284,40); MS: m/e = 284 ($M^{\oplus}$, 100 %); IR: $\bar{\nu}$ = '732 (C=O) $cm^{-1}$. |
| IIb.40 | $CH_2CO_2nC_3H_7$ | $C_{20}H_{26}O_2$ (298,43); MS: m/e = 298 ($M^{\oplus}$, 100 %); IR: $\bar{\nu}$ = 1733 (C=O) $cm^{-1}$. |

1) HW: Houben-Weyl: Methoden der organ. Chemie, Bd. 5, Teil 2c, Thieme Verlag Stuttgart, New York 1985.

Fortsetzung - Tabelle 2

| Verb.-Nr. | R1 | Bem.: Literaturzitate[1] bzw. Charakterisierung der neuen Verbindungen |
|---|---|---|
| IIb.41 | $CH_2CO_2iC_3H_7$ | $C_{20}H_{26}O_2$ (298,43); MS: m/e = 298 (M⊕, 100 %); IR: $\bar{\nu}$ = 1730 (C=O) $cm^{-1}$. |
| IIb.42 | $CH_2CO_2C_4H_9$ | $C_{21}H_{28}O_2$ (312,45); MS: m/e = 312 (M⊕, 100 %); IR: $\bar{\nu}$ = 1731 (C=O) $cm^{-1}$. |
| IIb.43 | $CH_2CO_2C_8H_{17}$ | $C_{25}H_{36}O_2$ (368,56); MS: m/e = 368 (M⊕, 100 %); IR: $\bar{\nu}$ = 1730 (C=O) $cm^{-1}$. |
| IIb.44 | $CH_2CO_2[(CH_2)_2O]_2C_2H_5$ | $C_{23}H_{34}O_4$ (374,52); IR: $\bar{\nu}$ = 1731 (C=O) $cm^{-1}$. |
| IIb.45 | $(CH_2)_2OH$ | siehe Beispiel 4 |
| IIb.46 | $(CH_2)_2CO_2H$ | $C_{18}H_{22}O_2$ (270,37); MS: m/e = 270 (M⊕, 100 %); IR: $\bar{\nu}$ = 1702 (C=O) $cm^{-1}$. $^1$H-NMR ($CDCl_3$): δ = 1,36 d(6H), 2,19 p(2H), 2,28 t(2H), 2,68 s(3H), 3,09 q(1H), 3,23 t(2H), 7,01 d(1H), 7,30 d(1H), 7,34 d(1H), 7,64 d(1H), 8,18 s(1H). |
| IIb.47 | $(CH_2)_2CO_2CH_3$ | $C_{19}H_{24}O_2$ (284,40); MS: m/e = 284 (M⊕, 100 %); IR: $\bar{\nu}$ = 1731 (C=O) $cm^{-1}$. |
| IIb.48 | $(CH_2)_2CO_2C_2H_5$ | $C_{20}H_{26}O_2$ (298,43); MS: m/e = 298 (M⊕, 100 %); IR: $\bar{\nu}$ = 1730 (C=O) $cm^{-1}$. |
| IIb.49 | $(CH_2)_2CO_2iC_3H_7$ | $C_{21}H_{28}O_2$ (312,45); MS: m/e = 312 (M⊕, 100 %); IR: $\bar{\nu}$ = 1731 (C=O) $cm^{-1}$. |
| IIb.50 | $(CH_2)_2CO_2C_4H_9$ | $C_{22}H_{30}O_2$ (326,48); MS: m/e = 326 (M⊕, 100 %); IR: $\bar{\nu}$ = 1730 (C=O) $cm^{-1}$. |
| IIa.51 | $(CH_2)_3OH$ | $C_{18}H_{24}O_2$ (256,39); MS: m/e = 256 (M⊕) 241, 238, 225, 183; IR: $\bar{\nu}$ = 1731 (C=O) $cm^{-1}$. |

[1] HW: Houben-Weyl: Methoden der organ. Chemie, Bd. 5, Teil 2c, Thieme Verlag Stuttgart, New York 1985.

Fortsetzung - Tabelle 2

| Verb.-Nr. | $R^1$ | Bem.: Literaturzitate[1)] bzw. Charakterisierung der neuen Verbindungen |
|---|---|---|
| IIa.52 | $(CH_2)_4CO_2H$ | $C_{20}H_{26}O_2$ (298,43); MS: m/e = 298 ($M^\oplus$, 100 %); IR: $\bar{\nu}$ = 1703 (C=O) $cm^{-1}$. |
| IIa.53 | $(CH_2)_4CO_2CH_3$ | $C_{21}H_{28}O_2$ (312,45); MS: m/e = 312 ($M^\oplus$, 100 %); IR: $\bar{\nu}$ = 1731 (C=O) $cm^{-1}$. |
| IIa.54 | $(CH_2)_5CO_2H$ | $C_{21}H_{28}O_2$ (312,45); MS: m/e = 312 ($M^\oplus$, 100 %); IR: $\bar{\nu}$ = 1699 (C=O) $cm^{-1}$. |
| IIa.55 | $(CH_2)_5CO_2CH_3$ | $C_{22}H_{30}O_2$ (326,48); MS: m/e = 326 ($M^\oplus$, 60 %); IR: $\bar{\nu}$ = 1730 (C=O) $cm^{-1}$. |
| IIa.56 | $(CH_2)_9CO_2H$ | $C_{26}H_{40}O_2$ (384,61); MS: m/e = 384 ($M^\oplus$); IR: $\bar{\nu}$ = 1695 (C=O) $cm^{-1}$. |
| IIa.57 | $(CH_2)_9CO_2CH_3$ | $C_{27}H_{42}O_2$ (398,63); MS: m/e = 398 ($M^\oplus$); IR: $\bar{\nu}$ = 1733 (C=O) $cm^{-1}$. |

1) HW: Houben-Weyl: Methoden der organ. Chemie, Bd. 5, Teil 2c, Thieme Verlag Stuttgart, New York 1985.

B) Herstellung der Azulenquadratsäurefarbstoffe

Beispiel 13

Guajazulenpropionsäuremethylesterquadratsäurefarbstoff (Ib.38)

13,5 g (0,05 mol) Guajazulenpropionsäuremethylester (Beispiel 2) und 5,8 g (0,05 mol) Quadratsäure wurden in 600 ml Toluol/n-Butanol (1:1) 8 Stunden am Wasserabscheider unter Rückfluß gekocht. Anschließend wurde das Lösungsmittel abdestilliert. Das grüne Öl wurde mit wenig Methylenchlorid aufgenommen und durch Säulenchromatographie (1 kg Kieselgel; Methylenchlorid/Aceton = 9:1) gereinigt.
Ausbeute: 10,1 g (65 %); Schmp.: 175-177 °C
UV (Toluol): $\lambda max$ = 773 nm, $\epsilon$ = 112100;
UV ($CH_2Cl_2$): $\lambda max$ = 768 nm, $\epsilon$ = 112700;
UV ($C_2H_5OH$): $\lambda max$ = 759 nm, $\epsilon$ = 115300;
IR (KBr): $\bar{\nu}$ = 2960, 2870, 1731 (C=O), 1611 , 1548, 1435, 1385, 1330 s 1247, 1178, 1075, 1011, 899 $cm^{-1}$;

$^1$H-NMR ($CDCl_3$): σ = 1,35 d(12H), 2,55 s(6H), 2,70 t (4H), 3,12 q(2H), 3,50 s (6H), 4,27 t(4H), 7,57 d(2H), 7,62 d(2H), 8,10 s(2H), 8,89 s(2H); $^{13}$C-NMR ($CDCl_3$): σ = 13,03, 24,18 (2C), 34,73, 35,28, 38,26, 51,47, 121,19, 130,85, 134,19, 134,69, 138,22, 139,77, 141,55, 147,68, 150,65, 154,33, 172,93, 181,36, 183,19;
MS: m/e = 618 ($M^{\oplus}$, 2%).

Beispiel 14

Guajazulenpropionsäureisopropylesterquadratsäurefarbstoff (Ib.41)

Herstellvariante 1

2,5 g (8,4 mmol) Guajazulenpropionsäureisopropylester (IIb.41) und 1,14 g (10 mmol) Quadratsäure wurden in 80 ml Toluol und 80 ml n-Butanol 8 Stunden am Wasserabscheider gekocht, danach wurde das Lösungsmittel abdestilliert und der Rückstand an Kieselgel chromatographiert.
Ausbeute: 1,6 g (56,5 %); Schmp.: 126-127 °C
UV ($CH_2Cl_2$: λmax = 769 nm, ε = 113550;
IR: $\bar{\nu}$= 2958, 1724 (C=O), 1611, 1431, 1387, 1327s, 1247, 1180, 1010, 960, 898, 800 $cm^{-1}$; $^1$H-NMR ($CDCl_3$): δ = 1,03 d(12H), 1,38 d (12H), 2,54 s(6H), 2,65 t (t(4H), 3,12 q(2H), 4,29 t(4H), 4,82 q(2H), 7,57 d-(d), (4H), 8,20 s(2H), 8,90 s(2H); $^{13}$C-NMR ($CDCl_3$): δ = 12,96, 21,69 (2C), 24,22 (2C), 34,96, 36,00, 38,37, 67,57, 121,55, 130,76, 134,00, 134,56, 138,01, 140,01, 141,83, 147,80, 150,42, 154,84, 172,02, 182,06, 183,10;
MS: m/e = 674 ($M^{\oplus}$, 15%).

Beispiel 15

Guajazulenpropionsäureisopropylesterquadratsäurefarbstoff (Ib.41)

Herstellvariante 2

5,13 g (0,02 mmol) Guajazulenpropionsäure (Beispiel 1) und 3,4 g (0,03 mmol) Quadratsäure wurden in 250 ml Toluol und 250 ml Isopropanol 12 Stunden am Wasserabscheider unter Rückfluß gekocht, danach wurde das Lösungsmittel abdestilliert und der Rückstand an kieselgel chromatographiert.
Das Produkt ist gemäß DC, IR- und $^1$H-NMR-Spektrum identisch mit dem Produkt aus Beispiel 5, zeigt jedoch einen leicht niedrigeren Schmelzpunkt, der durch Reste (< 1 %) freier Carbonsäuregruppen am Farbstoff bedingt sein kann.
Ausbeute: 2,6 g (38,5 %); Schmp.: 120-121 °C
UV ($CH_2Cl_2$): λmax = 769 nm, ε = 111950;

Beispiel 16

Bis-[3-(7-isopropyl-1-methyl)-azulen-4-yl-2-ethyl-propionsäure-n-butyl-ester]-quadratsäurefarbstoff (Verb.Nr. 10)

17,0 g (0,05 mol) Azulen-7-isopropyl-1-methyl-4-α-ethyl-propionsäureethylester (Beispiel 7) und 11,4 g (0,1 mol) Quadratsäure wurden in 1000 ml Toluol/n-Butanol (1:1) 1 Stunde zum Rückfluß erhitzt. Das nach Abdestillieren des Lösungsmittels verbleibende grüne Öl wurde in wenig Methylenchlorid aufgenommen und an Kieselgel chromatographiert (Methylenchlorid/Aceton 9:1). Man erhielt 10,9 g (54 %) Farbstoff Nr. 10 als rotbraune Kristalle vom Schmp. 154 °C.

Physikalische Daten:

UV ($CH_2Cl_2$): $\lambda_{max}$ = 771 mm ($\epsilon$ = 113525);
IR (KBr): $\tilde{\nu}$2959, 2928, 2870 (CH); 1728 (C=O); 1610, 1596, 1432, 1384, 1330s, 1250, 1223, 1181, 1033, 1004 $cm^{-1}$;
$^1$H-NMR ($CDCl_3$): $\delta$ = 0.78 m(12H), 1.06 me(4H), 1.25 mc(4H), 1.48 d(12H), 1.58 m(4H), 2.53 s(6H), 2.58 m-(2H), 3.08 me(2H), 3.72 m(4H), 3.78 m(2H), 4.62 mc(2H), 7.45, 7.55 AB(4H, 8.06s (2H), 8.85 s(2H);
$^{13}$C-NMR ($CDCl_3$): $\delta$ = 11.89 (2C), 12.94 (2C), 13.58 (2C), 19.05 (2C), 24.22 (4C), 26.02 (2C), 30.63 (2C), 38.38 (2C), 42.43 (2C), 49.68 (2C), 63.90 (2C), 121.78 (2C), 130.49 (2C), 133.85 (2C), 134.90 (2C), 137.80 (2C), 139.74 (2C), 142.24 (2C), 147.62 (2C), 150.32 (2C), 153.93 (2C), 174.84 (2C), 181.76 (2C), 183.16 (2C);
MS: m/e = 758 (100 %), 759-762 ($M^{\oplus}$-Isotopenpeaks).

In analoger Weise wurden die in Tabelle 3 aufgeführten Azulenquadratsäurefarbstoffe hergestellt. Die Struktur dieser Farbstoffe ist durch $^1$H-NMR-, $^{13}$C-NMR-, IR- und MS-Spektren gesichert.

Tabelle 3

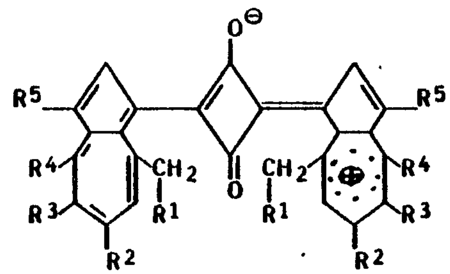

(* bedeutet, daβ das Produkt entweder ein Isomerengemisch oder nicht analysenrein ist)

| Verb.-Nr. | $R^1$ | $R^2$ | $R^3$ | $R^4$ | $R^5$ | λ max [nm] (in $CH_2Cl_2$) | Schmp. [°C] |
|---|---|---|---|---|---|---|---|
| 1 | $CH_2CO_2sC_4H_9$ | H | $CH(CH_3)_2$ | H | $CH_3$ | 767 | 108-110 |
| 2 | $CH_2CO_2CH_2$– 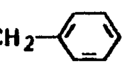 | H | $CH(CH_3)_2$ | H | $CH_3$ | 767 | [-öl-]* |
| 3 | $CH_2CO_2CH_2CH_2Br$ | H | $CH(CH_3)_2$ | H | $CH_3$ | 767 | 130-132 |
| 4 | $CHCO_2CH_3$ / $CH_3$ | H | $CH(CH_3)_2$ | H | $CH_3$ | 768 | 220-221 |
| 5 | $CHCO_2nC_4H_9$ / $CH_3$ | H | $CH(CH_3)_2$ | H | $CH_3$ | 770 | 172-173 |
| 6 | $CHCO_2CH_3$ / $C_2H_5$ | H | $CH(CH_3)_2$ | H | $CH_3$ | 768 | 196-197 |
| 7 | $CHCO_2C_2H_5$ / $C_2H_5$ | H | $CH(CH_3)_2$ | H | $CH_3$ | 770 | 185-187 |
| 8 | $CHCO_2nC_3H_7$ / $C_2H_5$ | H | $CH(CH_3)_2$ | H | $CH_3$ | 773 | 194 |

Tabelle 3 (Forts.)

| Verb.-Nr. | $R^1$ | $R^2$ | $R^3$ | $R^4$ | $R^5$ | λ max [nm] (in $CH_2Cl_2$) | Schmp. [°C] |
|---|---|---|---|---|---|---|---|
| 9 | $CHCO_2iC_3H_7$<br>\|<br>$C_2H_5$ | H | $CH(CH_3)_2$ | H | $CH_3$ | 771 | 180-182 |
| 10 | $CHCO_2nC_4H_9$<br>\|<br>$C_2H_5$ | H | $CH(CH_3)_2$ | H | $CH_3$ | 771 (siehe Bsp.8) | 154 |
| 11 | $CHCO_2sC_4H_9$<br>\|<br>$C_2H_5$ | H | $CH(CH_3)_2$ | H | $CH_3$ | 773 | 181 |
| 12 | $CHCO_2C_4H_5$<br>\|<br>$C_6H_5$ | H | $CH(CH_3)_2$ | H | $CH_3$ | 768 | 215-217 |
| 13 | $CH_2OC(O)CH_3$ | H | $CH(CH_3)_2$ | H | $CH_3$ | 765 | [-öl-]* |
| 14 | $(CH_2)_2OC(O)CH_3$ | H | $CH(CH_3)_2$ | H | $CH_3$ | 765 | [-öl-]* |
| 15 | $(CH_2)_2OC(O)C(CH_3)_3$ | H | $CH(CH_3)_2$ | H | $CH_3$ | 768 | > 80* |
| 16 | $(CH_2)_2OC(O)C_9H_{19}$ | H | $CH(CH_3)_2$ | H | $CH_3$ | 765 | [-öl-]* |
| 17 | $CH_2OC(O)$ 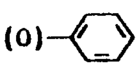 | H | $CH(CH_3)_2$ | H | $CH_3$ | 765 | [-öl-]* |
| 18 | $(CH_2)_2OC(O)$ 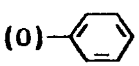 | H | $CH(CH_3)_2$ | H | $CH_3$ | 768 | 230-232 |
| 19 | $(CH_2)_2OC(O)$ 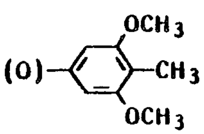 | H | $CH(CH_3)_2$ | H | $CH_3$ | 767 | 183-185 |
| 20 | $(CH_2)_2O\overset{O}{\overset{\|}{P}}(C_6H_5)_2$ | H | $CH(CH_3)_2$ | H | $CH_3$ | 769 | 208-209 |

Tabelle [illegible] (Forts.)

| Verb.-Nr. | $R^1$ | $R^2$ | $R^3$ | $R^4$ | $R^5$ | λ max [nm] (in $CH_2Cl_2$) | Schmp. [°C] |
|---|---|---|---|---|---|---|---|
| 21 | $(CH_2)_2O\overset{O}{\overset{\|}{P}}(CH_3)C_2H_5$ | H | $CH(CH_3)_2$ | H | $CH_3$ | 772 | [-öl-]* |
| 22 | $\underset{C_2H_5}{\underset{\|}{C}}HCH_2O\underset{C_2H_5}{\underset{\|}{\overset{O}{\overset{\|}{P}}}}-CH_3$ | H | $CH(CH_3)_2$ | H | $CH_3$ | 772 | 201-202* |
| 23 | $(CH_2)_2O\overset{O}{\overset{\|}{P}}(CH_3)_2$ | H | $CH(CH_3)_2$ | H | $CH_3$ | 770 | [-öl-]* |
| 24 | $(CH_2)_2OCH_3$ | H | $CH_3$ | H | $CH_3$ | 763 | [-öl-]* |
| 25 | $CO_2C_2H_5$ | $CH_3$ | H | $CH_3$ | H | 723 | 155-162* |
| 26 | $CO_2nC_3H_7$ | $CH_3$ | H | $CH_3$ | H | 721 | [-öl-]* |
| 27 | $CO_2iC_3H_7$ | $CH_3$ | H | $CH_3$ | H | 723 | 136-140* |
| 28 | H | $CH_3$ | H | $CH_3$ | $CH(CH_3)_2$ | 744 | ca. 255* |
| 29 | H | $CH_3$ | H | $CH_3$ | $\underset{CH_3}{\underset{\|}{C}}H-C_8H_{17}$ | 756 | 177-179 |
| 30 | H | $CH_3$ | H | $CH_3$ | $\underset{CH_3}{\underset{\|}{C}}H-C_{12}H_{25}$ | 757 | 145-148 |
| 31 | H | $CH_3$ | H | $CH_3$ | 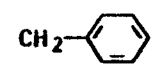 | 739 | [-öl-]* |
| 32 | H | $CH_3$ | H | $CH_3$ | 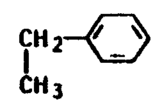 | 746 | [-öl-]* |

Tabelle 3 (Forts.)

| Verb.-Nr. | $R^1$ | $R^2$ | $R^3$ | $R^4$ | $R^5$ | λ max [nm] (in $CH_2Cl_2$) | Schmp. [°C] |
|---|---|---|---|---|---|---|---|
| 33 | H | $CH_3$ | H | $CH_3$ | 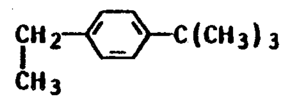 | 746 | [-öl-]* |
| 34 | H | $CH_3$ | H | $CH_3$ | 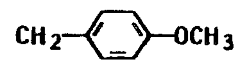 | 749 | [-öl-]* |
| 35 | H | $CH_3$ | H | $CH_3$ | 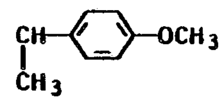 | 723 | ca. 280* |
| 36 | H | $CH_3$ | H | $CH_3$ | 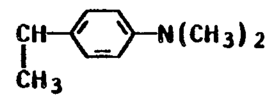 | 739 | 230-232 |
| 37 | H | $CH_3$ | H | $CH_3$ | 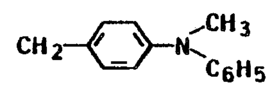 | 734 | > 160* |
| 38 | H | $CH_3$ | H | $CH_3$ | 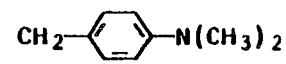 | 749 | 277-279 |
| 39 | H | $CH_3$ | H | $CH_3$ | 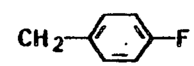 | 747 | 230-231 |
| 40 | H | 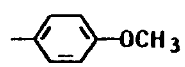 | H | $CH_3$ | H | 728 | 268 |
| 41 | H | 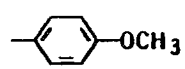 | H | 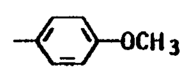 | H | 746 | 237 |

Tabelle 4: Zusammenstellung der Azulenquadratsäurefarbstoffe I

| Verb.-Nr. | $R^1$ | Bem.: Charakterisierung |
|---|---|---|
| Ia.1 | H | (Referenz) vgl. W. Ziegenbein u. H.-E. Sprenger, Angew. Chem., 78, 937 (1966); $C_{30}H_{26}O_2$ (418,54) λmax = 720 nm ($CHCl_3$), MS: m/e = 418 ($M^⊕$, 100 %). |
| Ia.2 | $CH_3$ | $C_{32}H_{30}O_2$ (446,59); λmax = 718 nm ($CH_2Cl_2$), MS: m/e = 446 ($M^⊕$, 100 %). |
| Ia.3 | $CH(CH_3)_2$ | $C_{36}H_{38}O_2$ (502,70); λmax = 720 nm ($CH_2Cl_2$), MS: m/e = 502 ($M^⊕$, 100 %). |
| Ia.4 | $C_4H_9$ | $C_{38}H_{42}O_2$ (530,75); λmax = 715 nm ($CH_2Cl_2$), MS: m/e = 530 ($M^⊕$, 100 %). |
| Ia.5 | $CH_2-C_6H_5$ | $C_{44}H_{38}O_2$ (598,79); λmax = 719 nm ($CH_2Cl_2$), MS: m/e = 598 ($M^⊕$, 80 %), 91 (100 %). |
| Ia.6 | $CO_2H$ | $C_{32}H_{26}O_6$ (506,56); λmax = 720 nm ($CH_2Cl_2$), MS: m/e = 506 ($M^⊕$, 10 %). |
| Ia.7 | $CO_2CH_3$ | $C_{34}H_{30}O_6$ (534,61); λmax = 720 nm ($CH_2Cl_2$), MS: m/e = 534 ($M^⊕$, 1 %); IR: $\bar{\nu}$ = 1731 $cm^{-1}$ (C=O). |
| Ia.8 | $CO_2C_4H_9$ | $C_{40}H_{42}O_6$ (618,77); λmax = 718 nm ($CH_2Cl_2$), MS: m/e = 618 ($M^⊕$, 0,5 %); IR: $\bar{\nu}$ = 1732 $cm^{-1}$ (C=O). |
| Ia.9 | $CH_2CO_2H$ | $C_{34}H_{30}O_6$ (534,61); λmax = 718 nm ($CH_2Cl_2$), MS: m/e = 534 ($M^⊕$); IR: $\bar{\nu}$ = 1698 $cm^{-1}$ (C=O). |
| Ia.10 | $CH_2CO_2CH_3$ | $C_{36}H_{36}O_6$ (562,66); λmax = 722 nm ($CH_2Cl_2$), 713 nm ($C_2H_5OH$); MS: m/e = 562 ($M^⊕$, 3 %); IR: $\bar{\nu}$ = 1731 (C=O), 1609, 1578, 1434, 1389, 1302s, 1209, 1162, 1104, 970, 718 $cm^{-1}$. |
| Ia.11 | $CH_2CO_2C_2H_5$ | $C_{38}H_{40}O_6$ (592,73); λmax = 718 nm ($CH_2Cl_2$), MS: m/e = 592 ($M^⊕$, 4 %); IR: $\bar{\nu}$ = 1730 (C=O), 1300 $cm^{-1}$. |

Fortsetzung - Tabelle 4

| Verb.-Nr. | R1 | Bem.: Charakterisierung |
|---|---|---|
| Ia.12 | $CH_2CO_2$-n-$C_3H_7$ | $C_{40}H_{44}O_6$ (620,79); λmax = 720 nm ($CH_2Cl_2$), MS: m/e = 620 (M⊕, 3 %); IR: $\bar{\nu}$ = 1729 (C=O), 1298 $cm^{-1}$. |
| Ia.13 | $CH_2CO_2$-i-$C_3H_7$ | $C_{40}H_{44}O_6$ (620,79); λmax = 721 nm ($CH_2Cl_2$), MS: m/e = 620 (M⊕, 0,5 %); IR: $\bar{\nu}$ = 1733 (C=O), 1303 $cm^{-1}$. |
| Ia.14 | $CH_2CO_2C_4H_9$ | $C_{42}H_{48}O_6$ (648,84); λmax = 720 nm ($CH_2Cl_2$), MS: m/e = 648 (M⊕, 1 %); IR: $\bar{\nu}$ = 1730 (C=O), 1301 $cm^{-1}$. |
| Ia.15 | $CH_2CO_2C_8H_{17}$ | $C_{50}H_{64}O_6$ (761,06); λmax = 720 nm ($CH_2Cl_2$), IR: $\bar{\nu}$ = 1731 (C=O), 1302 $cm^{-1}$. |
| Ia.16 | $(CH_2)_2OH$ | kein Produkt analog Beispiel 9 |
| Ia.17 | $(CH_2)_2CO_2H$ | $C_{36}H_{34}O_6$ (562,66); λmax = 716 nm ($CH_2Cl_2$), MS: m/e = 562 (M⊕, 1 %); IR: $\bar{\nu}$ = 1702 $cm^{-1}$. |
| Ia.18 | $(CH_2)_2CO_2CH_3$ | $C_{38}H_{38}O_6$ (590,72); λmax = 719 nm ($CH_2Cl_2$), MS: m/e = 590 (M⊕, 2 %); IR: $\bar{\nu}$ = 1733 (C=O), 1301s $cm^{-1}$. |
| Ia.19 | $(CH_2)_2CO_2C_2H_5$ | $C_{40}H_{42}O_6$ (618,77); λmax = 721 nm ($CH_2Cl_2$), MS: m/e = 618 (M⊕, 1 %); IR: $\bar{\nu}$ = 1730 (C=O), 1606, 1437, 1390, 1304s, 1210, 1166, 1074, 1034, 971, 720 $cm^{-1}$. $^{13}C$-NMR ($CDCl_3$): δ = 14,22, 28,15, 29,00, 34,39, 35,45, 60,70, 119,76, 124,65, 134,05, 134,77, 136,18, 137,59, 140,84, 146,00, 149,68, 150,01, 153,70, 172,09, 182,68. |
| Ia.20 | $(CH_2)_2CO_2iC_3H_7$ | $C_{42}H_{46}O_6$ (646,83); λmax = 722 nm ($CH_2Cl_2$), IR: $\bar{\nu}$ = 1733 (C=O), 1300s $cm^{-1}$. |

Fortsetzung - Tabelle 4

| Verb.-Nr. | R1 | Bem.: Charakterisierung |
|---|---|---|
| Ia.21 | $(CH_2)_2CO_2C_4H_9$ | $C_{44}H_{50}O_6$ (674,88); λmax = 720 nm ($CH_2Cl_2$), IR: $\bar{\nu}$ = 1731 (C=O), 1301s $cm^{-1}$. |
| Ia.22 | $(CH_2)_3OH$ | kein Produkt analog Beispiel 9 |
| Ia.23 | $(CH_2)_4CO_2H$ | $C_{40}H_{42}O_6$ (618,77); λmax = 717 nm ($CH_2Cl_2$), IR: $\bar{\nu}$ = 1704 (C=O) $cm^{-1}$. |
| Ia.24 | $(CH_2)_4CO_2CH_3$ | $C_{42}H_{46}O_6$ (646,83); λmax = 724 nm ($CH_2Cl_2$), IR: $\bar{\nu}$ = 1733 (C=O), 1298s $cm^{-1}$. |
| Ia.25 | $(CH_2)_5CO_2H$ | $C_{42}H_{46}O_6$ (646,83); λmax = 718 nm ($CH_2Cl_2$), IR: $\bar{\nu}$ = 1701 (C=O) $cm^{-1}$. |
| Ia.26 | $(CH_2)_5CO_2CH_3$ | $C_{44}H_{50}O_6$ (674,88); λmax = 722 nm ($CH_2Cl_2$), IR: $\bar{\nu}$ = 1730 (C=O), 1301s $cm^{-1}$. |
| Ia.27 | $(CH_2)_9CO_2H$ | $C_{50}H_{62}O_6$ (759,04); λmax = 719 nm ($CH_2Cl_2$), IR: $\bar{\nu}$ = 1698 (C=O) $cm^{-1}$. |
| Ia.28 | $(CH_2)_9CO_2CH_3$ | $C_{52}H_{66}O_6$ (787,10); λmax = 725 nm ($CH_2Cl_2$), IR: $\bar{\nu}$ = 1732 (C=O), 1302s $cm^{-1}$. |

Fortsetzung - Tabelle 4

| Verb.-Nr. | $R^1$ | Bem.: Charakterisierung |
|---|---|---|
| Ib.29 | H | (Referenz) vgl. W. Ziegenbein u. H.-E. Sprenger, Angew. Chem., 78, 937 (1966); Schmp.: 256-57 °C (Zers.); λmax = 767 nm, ε = 133500 ($CHCl_3$); $C_{34}H_{34}O_2$ (474,65); MS: m/e = 474 (M⊕, 100 %), 459 (M⊕-$CH_3$), 431, 209, 43; IR(KBr): $\bar{\nu}$ = 2980, 1610, 1585, 1420, 1384s, 1328s, 1297sh, 1238, 1213, 1180, 1087, 1006, 957, 897, 873, 839, 799, 645, 585 $cm^{-1}$; $^1H$-NMR ($CDCl_3$): σ = 1,36 d(6H), 2,51 s(3H), 3,11 q(1H), 3,38 s(3H), 7,48 d(d)(2H), 8,07 s(1H), 8,77 s(1H); $^{13}C$-NMR ($CDCl_3$): σ = 12,92, 24,33, 28,10, 38,31, 121,85, 130,46, 133,96, 135,50, 137,70, 139,09, 142,42, 147,09, 149,92, 152,60, 182,75, 183,46. |
| Ib.30 | $CH_3$ | $C_{36}H_{38}O_2$ (502,70); λmax = 766 nm ($CH_2Cl_2$), MS: m/e = 502 (M⊕, 100 %). |
| Ib.31 | $CH(CH_3)_2$ | $C_{40}H_{46}O_2$ (558,81); λmax = 769 nm ($CH_2Cl_2$), MS: m/e = 558 (M⊕, 100 %), 543, 528. |
| Ib.32 | $C_4H_9$ | $C_{42}H_{50}O_2$ (586,86); λmax = 767 nm ($CH_2Cl_2$), MS: m/e = 586 (M⊕, 100 %). |
| Ib.33 | $CH_2-C_6H_5$ | $C_{48}H_{46}O_2$ (654,90); λmax = 769 nm, ($CH_2Cl_2$), MS: m/e = 654 (M⊕, 40 %), 91 ($C_7H_7$⊕, 100 %); $^1H$-NMR ($CDCl_3$): σ = 1,35 d(12H), 2,54 s(6H), 2,76 t(4H), 3,09 q(2H), 4,13 t(4H), 6,90 m(4H, Phenyl), 7,03 m(6H, Phenyl), 7,37 d(2H), 7,52 d(2H), 8,08 s(2H), 8,70 s(2H). |
| Ib.34 | $CO_2H$ | $C_{36}H_{34}O_6$ (562,66); λmax = 760 nm ($CH_2Cl_2$), MS: m/e = 562 (M⊕, 10 %). IR: $\bar{\nu}$ = 1698 (C=O) $cm^{-1}$. |
| Ib.35 | $CO_2CH_3$ | $C_{38}H_{38}O_6$ (590,72); λmax = 767 nm ($CH_2Cl_2$), MS: m/e = 590 (M⊕, 100 %); IR: $\bar{\nu}$ = 1732 (C=O' $cm^{-1}$. |
| Ib.36 | $CO_2C_4H_9$ | $C_{44}H_{50}O_6$ (674,88); λmax = 769 nm ($CH_2Cl_2$), MS: m/e = 674 (M⊕), 101, 73, 57. IR: $\bar{\nu}$ = 1732 (C=O) $cm^{-1}$. |

Fortsetzung - Tabelle 4

| Verb.-Nr. | $\bar{R}^1$ | Bem.: Charakterisierung |
|---|---|---|
| Ib.37 | $CH_2CO_2H$ | $C_{38}H_{38}O_6$ (590,72); λmax = 768 nm ($CH_2Cl_2$), MS: m/e = 590 ($M^{\oplus}$, 4 %);<br>IR: $\bar{\nu}$ = 1701 (C=O) $cm^{-1}$. |
| Ib.38 | $CH_2CO_2CH_3$ | siehe Beispiel 6 |
| Ib.39 | $CH_2CO_2C_2H_5$ | $C_{42}H_{46}O_6$ (646,83); Schmp.: 138-140 °C λmax = 768 nm ($CH_2Cl_2$), MS: m/e = 646 ($M^{\oplus}$, 100 %), 631, 617, 601, 573, 500, 73, 45. $^1H$-NMR ($CDCl_3$): δ = 1,07 t(6H), 1,39 d(12H), 2,56 s(6H), 2,68 t(4H), 3,12 q(2H), 3,95 q(4H), 4,28 t(4H), 7,58 d(d) [4H], 8,10 s(2H), 8,90 s(2H);<br>IR: $\bar{\nu}$ = 1725 (C=O), 1611, 1434, 1384, 1321s, 1248, 1181, 1074, 1009, 899, 801, 598 $cm^{-1}$. |
| Ib.40 | $CH_2CO_2$-n-$C_3H_7$ | $C_{44}H_{50}O_6$ (674,88); λmax = 768 nm ($CH_2Cl_2$), MS: m/e = 674 ($M^{\oplus}$, 0,8 %); Schmp.: 141-146°C;<br>IR: $\bar{\nu}$ = 2962, 1724 (C=O), 1610, 1457, 1434, 1384, 1333, 1323s, 1250, 1074, 1011, 900, 804, 609 $cm^{-1}$; $^1H$-NMR ($CDCl_3$): δ = 0,76 t(6H), 1,39 d(12H), 1,43 h(4H), 2,56 s(6H), 2,69 t(4H), 3,11 q(2H), 3,86 t(4H), 4,30 t(4H), 7,58 d(d)(4H), 8,10 s(2H), 8,90 s(2H); $^{13}C$-NMR ($CDCl_3$): δ = 10,26, 12,97, 21,94, 24,21 (2C), 34,95, 35,63, 38,35, 65,98, 121,48, 130,79, 134,06, 134,59, 138,08, 139,99, 141,75, 147,79, 150,50, 172,60, 181,93, 183,12 |
| Ib.41 | $CH_2CO_2$-i-$C_3H_7$ | $C_{44}H_{50}O_6$ (674,88);<br>siehe Beispiel 7 und 8 |
| Ib.42 | $CH_2CO_2C_4H_9$ | $C_{46}H_{54}O_6$ (702,93); λmax = 767 nm ($CH_2Cl_2$), 760 nm ($C_2H_5OH$); MS: m/e = 702 ($M^{\oplus}$), 312, 101, 73, 57, 55 (100 %);<br>IR: $\bar{\nu}$ = 2956, 2928, 2856, 1736 (C=O), 1609, 1461, 1386, 1339s, 1258, 1057 $cm^{-1}$. |
| Ib.43 | $CH_2CO_2C_8H_{17}$ | $C_{54}H_{70}O_6$ (815,15); λmax = 767 nm ($CH_2Cl_2$),<br>IR: $\bar{\nu}$ = 1731 (C=O), 1330s $cm^{-1}$. |

Fortsetzung - Tabelle 4

| Verb.-Nr. | $R^1$ | Bem.: Charakterisierung |
|---|---|---|
| Ib.44 | $CH_2CO_2[(CH_2)_2O]_2C_2H_5$ | $C_{50}H_{62}O_{10}$ (823,04); $\lambda max$ = 770 nm ($CH_2Cl_2$), IR: $\bar{\nu}$ = 1732 (C=O), 1329, 1180 $cm^{-1}$. |
| Ib.45 | $(CH_2)_3OH$ | siehe Beispiel 9 |
| Ib.46 | $(CH_2)_2CO_2H$ | $C_{40}H_{42}O_6$ (618,77); $\lambda max$ = 765 nm ($CH_2Cl_2$), IR: $\bar{\nu}$ = 1699 (C=O) $cm^{-1}$. |
| Ib.47 | $(CH_2)_2CO_2CH_3$ | $C_{42}H_{46}O_6$ (646,83); $\lambda max$ = 767 nm, ($CHCl_2$), 760 nm ($C_2H_5OH$); MS: m/e = 646 ($M^{\oplus}$, 30 %); IR: $\bar{\nu}$ = 2960, 1731 (C=O), 1611, 1433, 1386, 1330s, 1246, 1081, 1012, 901. 578 $cm^{-1}$; $^1H$-NMR ($CDCl_3$): $\sigma$ = 1,35 d(2H), 1,94 q(4H), 2,21 t(4H), 2,55 s(6H), 3,10 q(2H), 3,55 s(6H), 3,96 t(4H), 7,55 d(d)[4H, Azul.], 8,10 s(2H, Azul.), 8,87 s(2H, Azul.); $^{13}C$-NMR ($CDCl_3$): $\sigma$ = 12,95, 24,20 (2C), 27,03, 33,48, 38,33, 38,91, 51,28, 121,63, 130,81, 133,86, 134,41, 138,22, 139,92, 141,98, 147,49, 150,26, 155,79, 173,46, 181,88, 183,05. |
| Ib.48 | $(CH_2)_2CO_2C_2H_5$ | $C_{44}H_{50}O_6$ (674,88); $\lambda max$ = 768 nm ($CH_2Cl_2$), MS: m/e = 674 ($M^{\oplus}$); IR: $\bar{\nu}$ = 1732 (C=O), 1330s $cm^{-1}$. |
| Ib.49 | $(CH_2)_2CO_2iC_2H_5$ | $C_{46}H_{54}O_6$ (702,93); $\lambda max$ = 767 nm ($CH_2Cl_2$), MS: m/e = 702 ($M^{\oplus}$); IR: $\bar{\nu}$ = 1730 (C=O), 1330s $cm^{-1}$. |

Fortsetzung - Tabelle 4

| Verb.-Nr. | $R^1$ | Bem.: Charakterisierung |
|---|---|---|
| Ib.50 | $(CH_2)_2CO_2C_4H_9$ | $C_{48}H_{58}O_6$ (730,99); λmax = 768 nm ($CH_2Cl_2$), IR: $\bar{\nu}$ = 2960, 1720 (C=O), 1611s, 1433, 1388, 1336s, 1296, 1252s, 1225, 1048, 1015, 991, 907, 801, 610 $cm^{-1}$; $^1H$-NMR ($CDCl_3$): δ = 0,88 t(6H), 1,32 q(4H), 1,41 d(12H), 1,53 q(4H), 1,92 q(4H), 2,19 t(4H), 2,57 s(6H), 3,14 q(2H), 3,90 t(4H), 3,98 t(4H), 7,57 d(d), (4H), 8,12 s(2H), 8,84 s(2H); $^{13}C$-NMR ($CDCl_3$): δ = 13,05, 13,69, 19,07, 24,24 (2C), 27,03, 30,58, 33,53, 38,32, 38,76, 64,18, 121,28, 130,72, 133,86, 134,42, 138,23, 139,49, 139,55, 141,81, 147,29, 150,25, 155,60, 173,26, 180,72, 183,14. |
| Ib.51 | $(CH_2)_3OH$ | |
| Ib.52 | $(CH_2)_4CO_2H$ | $C_{44}H_{50}O_6$ (674,88); λmax = 765 nm ($CH_2Cl_2$), IR: $\bar{\nu}$ = 1703 (C=O) $cm^{-1}$. |
| Ib.53 | $(CH_2)_4CO_2CH_3$ | $C_{46}H_{54}O_6$ (702,93); λmax = 768 nm ($CH_2Cl_2$), IR: $\bar{\nu}$ = 1733 (C=O), 1331s $cm^{-1}$. |
| Ib.54 | $(CH_2)_5CO_2H$ | $C_{46}H_{54}O_6$ (702,93); λmax = 764 nm ($CH_2Cl_2$), IR: $\bar{\nu}$ = 1702 (C=O) $cm^{-1}$. |
| Ib.55 | $(CH_2)_5CO_2CH_3$ | $C_{48}H_{58}O_6$ (730,99); λmax = 767 nm ($CH_2Cl_2$), IR: $\bar{\nu}$ = 1732 (C=O), 1330s $cm^{-1}$. |
| Ib.56 | $(CH_2)_9CO_2H$ | $C_{54}H_{70}O_6$ (815,15); λmax = 766 nm ($CH_2Cl_2$), IR: $\bar{\nu}$ = 1705 (C=O) $cm^{-1}$. |
| Ib.57 | $(CH_2)_9CO_2CH_3$ | $C_{56}H_{74}O_6$ (843,20); λmax = 770 nm ($CH_2Cl_2$), IR: $\bar{\nu}$ = 1731 (C=O), 1331s $cm^{-1}$. |

C) Herstellung der optischen Aufzeichnungsmedien

Beispiel 17

Eine 5 gew.%ige Lösung des Farbstoffs Ib.42 in Toluol wurde mit einer Spritze bei ca. 2000 U/min auf eine rotierende Polymethylmethacrylatscheibe aufgetragen und dann das restliche Lösungsmittel bei 5000 U/min abgeschleudert. Man erhielt eine homogene, hochreflektierende Farbstoff-Schicht, welche sich mit einem Halbleiterlaser (λ = 830 nm) sehr gut beschreiben ließ. Die Information können mit gutem Kontrast wieder ausgelesen werden.

Beispiel 18

Eine 3 gew.%ige Lösung des Farbstoffs Ib.41, welche 30 Gew.%, bezogen auf den Feststoffgehalt der Lösung, Polymethylmethacrylat enthielt, wurde analog Beispiel 9 auf eine gerillte Polycarbonatscheibe aufgescheudert. Man erhielt eine homogene, hochreflektierende Farbstoff-Schicht, die auf dem Substrat gut haftet, die Spurrillen des Substrats gut abbildet und mit einem Halbleiterlaser (λ = 830 nm) sehr gut beschreibbar war. Die eingeschriebene Information war im Klimatest stabil und kann mit gutem Kontrast beliebig oft wieder ausgelesen werden.

Beispiel 19

Eine 2 gew.%ige Lösung des Farbstoffs Ib.38, welche, bezogen auf den Feststoffgehalt der Lösung, 30 Gew.% Polymethylmethacrylat als Bindemittel und 5 Gew.% 4-Octyl-4′-fluor-diphenyldithiolennickel als Stabilisator enthielt, wurde analog Beispiel 9 auf eine gerillte Polycarbonatscheibe aufgeschleudert. Die erhaltene Speicherschicht war derjenigen aus Beispiel 11 in allen Belangen vergleichbar, wies aber eine erhöhte Stabilität gegenüber UV-Licht auf.

Beispiel 20

Eine 2 gew.%ige Lösung des Farbstoffs Ib.10 in Propanol/Diacetonalkohol 1:1, welche, bezogen auf den Feststoffgehalt der Lösung, 30 Gew.% Polymethylmethacrylat und 5 Gew.% Biscampheratodithiolennickel enthielt, wurde analog Beispiel 9 auf eine Glasscheibe aufgeschleudert. Die erhaltene Farbstoffschicht war homogen und zeigte eine hohe Grundreflektivität. Sie konnte mit einem Halbleiterlaser (λ = 780 nm) gut beschrieben werden. Die eingeschriebenen Information sind unter der üblichen Testbedingungen stabil und können beliebig oft wieder ausgelesen werden.

Beispiel 21

Eine 5 gew.%ige Lösung des Farbstoffs 10 in Toluol wurde mit einer Spritze bei ca. 2000 U/min auf eine rotierende Polymethylmethacrylatscheibe aufgetragen und dann das restliche Lösungsmittel bei 5000 U/min abgeschleudert. Man erhielt eine homogene, hochreflektierende Farbstoff-Schicht, welche sich mit einem Halbleiterlaser (λ = 830 nm) sehr gut beschrieben ließ. Die Informationen können mit gutem Kontrast wieder ausgelesen werden.

Beispiel 22

Eine 3 gew.%ige Lösung des Farbstoffs 10 in Propanol/Diacetonalkohol, welche 30 Gew.%, bezogen auf den Feststoffgehalt der Lösung, MMA/MAS-Copolymer enthielt, wurde analog Beispiel 9 auf eine gerillte Polycarbonatscheibe aufgeschleudert. Man erhielt eine homogene, hochreflektierende Farbstoff-Schicht, die auf dem Substrat gut haftet, die Spurrillen des Substrats gut abbildet und mit einem Halbleiterlaser (λ = 830 nm) sehr gut beschriebbar war. Die eingeschriebene Information war im Klimatest stabil und kann mit gutem Kontrast beliebig oft wieder ausgelesen werden.

Beispiel 23

Eine 2 gew.%ige Lösung des Farbstoffs, 10, welche, bezogen auf den Feststoffgehalt der Lösung 30 Gew.% Polymethylmethacrylat als Bindemittel und 5 Gew.% 4-Octyl-4′-fluor-diphenyldithiolennickel als Stabilisator enthielt, wurde analog Beispiel 9 auf eine gerillte Polycarbonatscheibe aufgeschleudert. Die erhaltene Speicherschicht war derjenigen aus Beispiel 9 in allen Belangen vergleichbar, wies aber eine erhöhte Stabilität gegenüber UV-Licht auf.

Beispiel 24

Eine 2 gew.%ige Lösung des Farbstoffs 22 in Propanol/Diacetonalkohol 1:1, welche, bezogen auf den Feststoffgehalt der Lösung, 30 Gew.% Polymethylmethacrylat und 5 Gew.% Biscampheratodithiolennickel enthielt, wurde analog Beispiel 9 auf einen Glasscheibe aufgeschleudert. Die erhaltene Farbstoffschicht war homogen und zeigte eine hohe Grundreflektivität. Sie konnte mit einem Halbleiterlaser (λ = 780 nm) gut beschrieben werden . Die eingeschriebenen Informationen sind unter den üblichen Testbedingungen stabil und können beliebig oft wieder ausgelesen werden.

## Ansprüche

1. Azulenquadratsäurefarbstoffe der Formel I

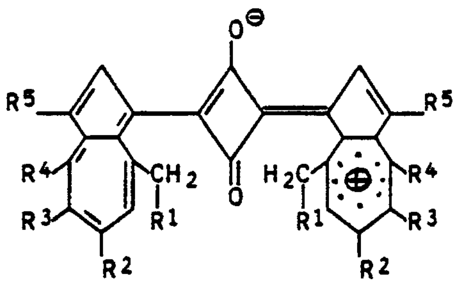

(I),

in der

$R^1$ $C_1$-$C_{12}$-Alkyl, das gegebenenfalls durch Halogen, Amino, Hydroxy, $C_1$-$C_{12}$-Alkoxy, Phenyl, substituiertes Phenyl, Carboxyl, $C_1$-$C_{12}$-Alkoxycarbonyl, $C_1$-$C_{12}$-Halogenalkoxycarbonyl, $C_1$-$C_{12}$-Phenylalkoxycarbonyl, Cyano, $C_1$-$C_{12}$-Alkanoyloxy, Benzoyloxy, substituiertes Benzoyloxy und/oder den Rest

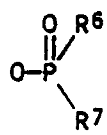

,

wobei $R^6$ und $R^7$ gleich oder verschieden sind und unabhängig voneinander jeweils für $C_1$-$C_4$-Alkyl oder Phenyl stehen, substituiert ist, Carboxyl, $C_1$-$C_{12}$-Alkoxycarbonyl, wobei die Alkylkette gegebenenfalls durch ein oder mehrere Sauerstoffatome unterbrochen ist, Carbamoyl oder $C_1$-$C_4$-Mono- oder Dialkylcarbamoyl und

$R^2$, $R^3$, $R^4$ und $R^5$ gleich oder verschieden sind und unabhängig voneinander jeweils Wasserstoff oder $C_1$-$C_{12}$-Alkyl, das gegebenenfalls durch Halogen, Amino, $C_1$-$C_{12}$-Alkoxy, Phenyl, substituiertes Phenyl, Carboxy, $C_1$-$C_{12}$-Alkoxycarbonyl oder Cyano substituiert ist, bedeuten,
mit der Maßgabe, daß wenn $R^5$ Wasserstoff bedeutet, an einem oder beiden Azulenringen die Ringpositionen der Substituenten $CH_2$-$R^1$ und $R^4$ innerhalb eines Azulenrings auch gegeneinander vertauscht sein können und daß $R^1$ auch Wasserstoff bedeutet, wenn $R^5$ für Methyl oder Ethyl, das jeweils durch Phenyl oder substituiertes Phenyl substituiert ist, oder für $C_3$-$C_{12}$-Alkyl steht oder wenn mindestens einer der beiden Reste $R^2$ und $R^4$ für Phenyl oder substituiertes Phenyl steht.

2. Azulenquadratsäurefarbstoffe gemäß Anspruch 1, dadurch gekennzeichnet, daß $R^2$, $R^3$, $R^4$ und $R^5$ jeweils $C_1$-$C_6$-Alkyl bedeuten und $R^1$ die in Anspruch 1 genannte Bedeutung besitzt.

3. Azulenquadratsäurefarbstoffe gemäß Anspruch 1, dadurch gekennzeichnet, daß $R^2$ und $R^4$ jeweils Methyl und $R^3$ und $R^5$ jeweils Wasserstoff bedeuten und $R^1$ die in Anspruch 1 genannte Bedeutung besitzt.

4. Azulenquadratsäurefarbstoffe gemäß Anspruch 1, dadurch gekennzeichnet, daß $R^2$ und $R^4$ jeweils Wasserstoff, $R^3$ Isopropyl und $R^5$ Methyl bedeuten und $R^1$ die in Anspruch 1 genannte Bedeutung besitzt.

5. Optisches Aufzeichnungsmedium, enthaltend einen Träger sowie einen strahlungsempfindlichen, Farbstoff und gegebenenfalls Bindemittel enthaltenden dünnen Beschichtungsfilm, dadurch gekennzeichnet, daß der Farbstoff die Formel I

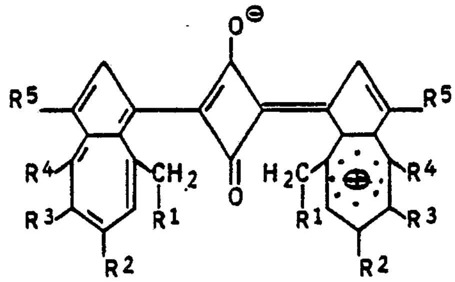

(I)

aufweist in der
$R^1$ $C_1$-$C_{12}$-Alkyl, das gegebenenfalls durch Halogen, Amino, Hydroxy, $C_1$-$C_{12}$-Alkoxy, Phenyl, substituiertes Phenyl, Carboxyl, $C_1$-$C_{12}$-Alkoxycarbonyl, $C_1$-$C_{12}$-Halogenalkoxycarbonyl, $C_1$-$C_{12}$-Phenylalkoxycarbonyl, Cyano, $C_1$-$C_{12}$-Alkanoyloxy, Benzoyloxy, substituiertes Benzoyloxy und/oder den Rest

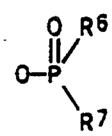

,

wobei $R^6$ und $R^7$ gleich oder verschieden sind und unabhängig voneinander jeweils für $C_1$-$C_4$-Alkyl oder Phenyl stehen, substituiert ist, Carboxyl, $C_1$-$C_{12}$-Alkoxycarbonyl, wobei die Alkylkette gegebenenfalls durch ein oder mehrere Sauerstoffatome unterbrochen ist, Carbamoyl oder $C_1$-$C_4$-Mono- oder Dialkylcarbamoyl und
$R^2$, $R^3$, $R^4$ und $R^5$ gleich oder verschieden sind und unabhängig voneinander jeweils Wasserstoff oder $C_1$-$C_{12}$-Alkyl, das gegebenenfalls durch Halogen, Amino, $C_1$-$C_{12}$-Alkoxy, Phenyl, substituiertes Phenyl, Carboxyl, $C_1$-$C_{12}$-Alkoxycarbonyl oder Cyano substituiert ist, bedeuten,
mit der Maßgabe, daß wenn $R^5$ Wasserstoff bedeutet, an einem oder beiden Azulenringen die Ringpositionen der Substituenten $CH_2$-$R^1$ und $R^4$ innerhalb eines Azulenringes auch gegeneinander vertauscht sein können und daß $R^1$ auch Wasserstoff bedeutet, wenn $R^5$ für Methyl oder Ethyl, das jeweils durch Phenyl oder substituiertes Phenyl substituiert ist, oder für $C_3$-$C_{12}$-Alkyl steht oder wenn mindestens einer der beiden Reste $R^2$ und $R^4$ für Phenyl oder substituiertes Phenyl steht.

6. Optisches Aufzeichnungsmedium gemäß Anspruch 5, dadurch gekennzeichnet, daß $R^2$, $R^3$, $R^4$ und $R^5$ jeweils $C_1$-$C_6$-Alkyl bedeuten und $R^1$ die in Anspruch 1 genannte Bedeutung besitzt.

7. Optisches Aufzeichnungsmedium gemäß Anspruch 5, dadurch gekennzeichnet, daß $R^2$ und $R^4$ jeweils Methyl und $R^3$ und $R^5$ jeweils Wasserstoff bedeuten und $R^1$ die in Anspruch 1 genannte Bedeutung besitzt.

8. Optisches Aufzeichnungsmedium gemäß Anspruch 5, dadurch gekennzeichnet, daß $R^2$ und $R^4$ jeweils Wasserstoff, $R^3$ Isopropyl und $R^5$ Methyl bedeuten und $R^1$ die in Anspruch 1 genannte Bedeutung besitzt.

9. Azulenderivate der Formel II

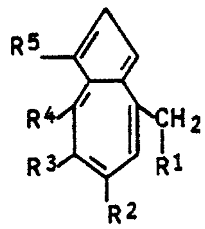

(II),

in der

$R^1$ $C_2$-$C_{12}$-Alkyl, das gegebenenfalls durch Halogen, Amino, Hydroxy, $C_1$-$C_{12}$-Alkoxy, Phenyl, substituiertes Phenyl, Carboxyl, $C_1$-$C_{12}$-Alkoxycarbonyl, $C_1$-$C_{12}$-Halogenalkoxycarbonyl, $C_1$-$C_{12}$-Phenylalkoxycarbonyl, Cyano, $C_1$-$C_{12}$-Alkanoyloxy, Benzoyloxy, substituiertes Benzoyloxy und/oder den Rest

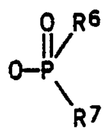

,

wobei $R^6$ und $R^7$ gleich oder verschieden sind und unabhängig voneinander jeweils für $C_1$-$C_4$-Alkyl oder Phenyl stehen, substituiert ist, $C_1$-$C_{12}$-Alkoxycarbonyl, wobei die Alkylkette gegebenenfalls durch ein oder mehrere Sauerstoffatome unterbrochen sind, Carbamoyl oder $C_1$-$C_4$-Mono- oder Dialkylcarbamoyl und

$R^2$, $R^3$, $R^4$ und $R^5$ gleich oder verschieden sind und unabhängig voneinander jeweils Wasserstoff oder $C_1$-$C_{12}$-Alkyl, das gegebenenfalls durch Halogen, Amino, $C_1$-$C_{12}$-Alkoxy, Phenyl, substituiertes Phenyl, Carboxyl, $C_1$-$C_{12}$-Alkoxycarbonyl oder Cyano substituiert ist, bedeuten, mit der Maßgabe daß $R^1$ auch Wasserstoff bedeutet, wenn $R^5$ für Methyl oder Ethyl, das jeweils durch Phenyl oder substituiertes Phenyl substituiert ist, oder für $C_3$-$C_{12}$-Alkyl steht oder wenn mindestens einer der beiden Reste $R^2$ und $R^4$ für Phenyl oder substituiertes Phenyl steht.